(19) Europäisches Patentamt
European Patent Office
Office européen des brevets

(11) Publication number: **0 013 744**
**B1**

(12) **EUROPEAN PATENT SPECIFICATION**

(45) Date of publication of patent specification: **07.11.84**

(51) Int. Cl.$^3$: **C 08 F 10/00**, C 08 F 4/62, C 07 F 9/02

(21) Application number: **79105234.3**

(22) Date of filing: **17.12.79**

(54) **Catalyst and process for the polymerization of alpha-olefins and a process for preparing an alpha-olefin polymerization catalyst component.**

(30) Priority: **26.12.78 US 973108**
**26.12.78 US 972822**

(43) Date of publication of application:
**06.08.80 Bulletin 80/16**

(45) Publication of the grant of the patent:
**07.11.84 Bulletin 84/45**

(84) Designated Contracting States:
**BE DE FR GB IT NL**

(56) References cited:
**DE-A-2 342 200**
**FR-A-2 128 537**
**US-A-3 669 945**
**US-A-3 896 094**
**US-A-3 910 976**
**US-A-3 929 745**

(73) Proprietor: **Standard Oil Company**
**200 East Randolph Drive**
**Chicago Illinois 60601 (US)**

(72) Inventor: **Hoff, Glen Richard**
**325 Basswood Drive**
**Naperville Illinois 60540 (US)**
Inventor: **Fotis, Peter**
**3243 Franklin Street**
**Highland Indiana 46322 (US)**

(74) Representative: **Spott, Gottfried, Dr. et al**
**Patentanwälte Spott und Puschmann**
**Sendlinger-Tor-Platz 11**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 013 744 B1

**Description**

This invention relates to an alpha-olefin polymerization catalyst comprising (A) an organometallic promoter; and (B) a solid, hydrocarbon-insoluble component which is the reaction product of components comprising (1) at least one compound of Group IVB, VB, or VIB metal, (2) at least one divalent metal salt of a phosphorus acid ester having at least one phosphorus acid ester group bonded to metal through oxygen or sulfur, and (3) at least one alkylaluminum halide. The invention also relates to a process for polymerization of alpha-olefins by contacting at least one alpha-olefin with such a catalyst and further to a process for preparing an alpha-olefin polymerization catalyst component comprising reacting components comprising (1) at least one compound of a Group IVB, VB, or VIB metal, (2) at least one divalent metal salt of a phosphorus acid ester having at least one phosphorus acid ester group bonded to metal through oxygen or sulfur, and (3) at least one alkylaluminum halide.

The groups of metals mentioned above and in the following description are referred to the Periodic Table appearing in *Handbook of Chemistry and Physics*, 50th ed., Chemical Rubber Co. (1969).

In the polymerization of alpha-olefins, both process efficiency and product characteristics can vary substantially depending on the choice of polymerization catalyst. For example, from the standpoint of process efficiency it is desirable to employ highly active catalysts which allow for preparation of polyalpha-olefins in sufficiently high yields, relative to the amount of catalyst employed, that separation of catalyst residues from the polymeric product is unnecessary. From the standpoint of product characteristics, it is desirable to be able to produce a wide range of product grades using a single catalyst, and to this end, the catalyst to be employed should exhibit a relatively high sensitivity to agents, such as hydrogen, typically employed during polymerization to control polymer molecular weights. Further, the catalyst to be employed should be capable of producing poly-alpha-olefins having molecular weight distributions sufficient to ensure ease of processing.

In an attempt to provide catalysts having one or more of the above properties, the prior art has proposed a variety of catalysts generally comprising an organometallic promoter and a supported transition metal containing component. Prior art that may be considered relevant to the present invention includes the following patents. U.S. Patent No. 3,901,863, to Berger et al., discloses highly active alpha-olefin polymerization catalysts comprising an organometallic promoter and a supported component prepared by reacting a compound of a Group IVB, VB, or VIB metal with a support material which is a compound of a Group IA, IIA, IIB, IIIA, IVA, VIIB, or VIII metal having at least one sequence of metal-oxygen-organic radical bonds per metal atom, and then reacting the resulting product with an alkylaluminum halide. The support material also may include other radicals, including $(PO_4)_{1/3}$, attached to the metal through oxygen. Additionally, the organic radicals attached to the metal through oxygen may contain "hetero atoms such as O, N, P . . . in their chain". However, there is no suggestion to employ phosphorus acid ester salts as a support material. Similar proposals are found in U.S. Patent No. 3,718,636, to Stevens et al., and British Patent No. 1,309,987, to Solvay, both of which disclose alpha-olefin polymerization catalysts comprising an organometallic promoter and a component prepared by treatment of a support material which is a compound of a divalent metal such as calcium, zinc, manganese, cobalt, nickel, or magnesium, with an organometallic compound and reaction of the resulting product with a halide or oxohalide of a Group IVB, VB, or VIB metal. It is disclosed that suitable support materials include "salts of inorganic oxyacids, for example, sulfates, nitrates, phosphates, carbonates and silicates". A related proposal is found in U.S. Patent No. 3,214,417, to Bloyaert et al., which discloses alpha-olefin polymerization catalysts comprising an organometallic promoter and a component prepared from a support material which is an inorganic phosphate salt, and a halide, alkoxide, or alkoxyhalide of a Group IVB, VB, or VIB metal. Hydrated metal orthophosphates and hydrated and anhydrous hydroxyphosphates are specifically disclosed as useful support materials. Stevens et al., Solvay, and Bloyaert et al. fail to suggest the use of phosphorus acid ester salts as support materials.

Although certain of the above-described catalysts exhibit one or more desirable properties, the majority fail to exhibit a suitable balance of high activity, sensitivity to molecular weight control agents, and capability to produce polyalpha-olefins having suitable molecular weight distributions. Accordingly, there is a need for an improved alpha-olefin polymerization catalyst having a suitable balance of properties. It is an object of this invention to provide an improved alpha-olefin polymerization catalyst and a method for the preparation thereof. A further object of the invention is to provide alpha-olefin polymerization catalysts having sufficiently high activities to eliminate the need for separation of catalyst residues from polymeric products, sufficiently high sensitivity to molecular weight control agents as to allow for the preparation of a wide range of product grades using a single catalyst, and the ability to produce polyalpha-olefins which are easily processed. A further object of the invention is to provide for the polymerization of alpha-olefins in the presence of such catalysts. Other objects of the invention will be apparent to persons of skill in the art from the following description and the appended claims.

We have found that the objects of this invention can be achieved through the use of divalent metal salts of phosphorus acid esters having at least one phosphorus acid ester group bonded to metal through oxygen or sulfur as support materials in the preparation of supported, transition metal-

containing catalyst components. The invented supported catalyst components, when combined with an organometallic promoter and employed in the polymerization of alpha-olefins, exhibit a relatively high sensitivity to molecular weight control agents and are capable of producing polyalpha-olefins having molecular weight distributions sufficient to ensure ease of processing, and as such, are useful in the preparation of commercially useful polymeric products.

Moreover, the catalysts exhibit extremely high activities, and accordingly, such commercially useful products can be produced without the need for separation of catalyst residues. Additionally, polymers produced in the presence of the invented catalysts contain advantageously low levels of fine particles such that handling and processing of the polymers is facilitated. Moreover, the invented catalysts offer advantages in terms of compatibility with polymerization systems wherein temporarily and reversibly deactivated catalyst components are added to a polymerization zone in a flush stream containing polymerizable alpha-olefin or otherwise contact polymerizable monomer prior to entry into the polymerization zone because the components can be temporarily and reversibly deactivated by contact with conventional deactivation agents prior to entry into the polymerization zone and then activated with an organometallic promoter within the polymerization zone.

As noted above, a variety of alpha-olefin polymerization catalysts containing supported components prepared from compounds of the Group IVB, VB, or VIB metals and support materials which are compounds of divalent metals have been reported and it is generally known that catalyst performance can vary substantially depending on the choice of support material. However, the highly desirable performance of the invented catalysts could not have been predicted from that of known catalysts. Thus, as illustrated in the examples appearing hereinafter, the use of divalent metal salts of organic esters of phosphorus acids as support materials leads to catalysts of unexpectedly high activities as compared with the activities of known catalysts containing supported components prepared from divalent metal salts of inorganic phosphates. The invented catalysts also allow for significantly greater control of polymer molecular weights than do such prior art catalysts. It also is surprising that phosphorus acid ester salts of not only magnesium, but also other divalent metals such as manganese and iron can be employed according to this invention to obtain highly desirable results. While the prior art has disclosed the use of salts of a wide variety of metals as support materials, persons of skill in the art are well aware that the use of salts of metals other than magnesium typically leads to catalysts of little practical value.

Divalent metal salts of organic esters of phosphorus acids have been disclosed as being useful in the preparation of unsupported, vanadium and chromium organophosphates useful as alpha-olefin polymerization catalyst components, and such prior art may be of interest to the present invention. For example, U.S. Patent No. 3,910,976, to Fein, discloses hydrocarbon soluble halo or pseudo-halo derivatives of vanadium organophosphates which are prepared by reaction, in aqueous solution, of divalent metal salts of halogen containing phosphorus acid esters, including salts of beryllium, magnesium, calcium, zinc, strontium, cadmium, and barium, with tetravalent vanadyl salts such as the sulfate, halides, oxalate, or acetate. The disclosed compositions are combined with an organoaluminum halide and employed in the polymerization of alpha-olefins, and particularly in the preparation of EP and EPDM rubbers. U.S. Patent No. 3,669,945 to Nakaguchi et al., also discloses compositions useful as alpha-olefin polymerization catalyst components and prepared by reacting, either neat or in the presence of water and/or alcohol, a vanadium compound, such as an oxide, halide, oxohalide, sulfate, oxosulfate, or a salt or ester of vanadic acid, with a phosphoric acid or a salt thereof or an ester thereof with an alcohol, and treating the resulting product with an alcohol. It also is disclosed that the resulting catalyst component may be deposited on a carrier material such as a metal oxide.

Catalyst components similar to those described above but containing chromium instead of vanadium are disclosed in U.S. Patents Nos. 3,901,825 and 4,008,359, both to Meyer et al., and U.S. Patent Nos. 3,969,272, and 4,041,226, both to Meyer. These catalyst components are hydrogen soluble chromium tris-diorgano ortho-phosphates and are prepared by reacting, typically in the presence of water, metal salts of organic esters of phosphorus acid, including salts of divalent magnesium, with trivalent chromium compounds. The use of silica, talc, and other non-reinforcing powdered fillers as carriers for such catalyst components also is disclosed.

French Patent No. 2,128,537, to Dart Industries Inc., which is equivalent to British Patent No. 1,392,305, discloses a process for preparing vanadium and phosphorus-containing catalyst components by reacting components comprising (1) at least one compound of a Group IVB, VB or VIB metal, e.g. vanadyl sulfate, (2) at least one divalent metal salt of a phosphorus acid ester group bonded to metal through oxygen or sulfur e.g. produced from alkylphosphate and an acetate or oxalate of a Group II metal, and (3) at least one alkyl aluminum halide. There is, however, no mentioning of specific atomic ratios under which the three components referred to above have to be reacted in order to produce a catalyst exhibiting high activity, and this method is in addition to that not to be conducted under the substantial exclusion of water. The catalysts prepared by this method are typically hydrocarbon soluble unsupported compositions and are thus not hydrocarbon insoluble compositions which contain a combination of organoaluminum halide with a reaction product of vanadyl sulfate with organophosphorus acid or a salt thereof.

Although the above described patents may be of interest to the present invention in disclosing the

use of divalent metal salts of organic esters of phosphorus acids in the preparation of alpha-olefin polymerization catalyst components, the invented catalyst components are clearly distinguishable. In contrast to the disclosed, unsupported vanadium and chromium organophosphates, which may be prepared by reaction of vanadium or chromium compounds with divalent metal salts of organic esters of phosphorus acids such as that metathesis of the metals takes place, the invented catalyst components are supported, hydrocarbon insoluble materials prepared by bonding compounds of the Group IVB, VB, or VIB metals to divalent metal salts of organic esters of phosphorus acids. Moreover, the catalyst components of the aforesaid patents typically are prepared in the presence of water. In contrast, water acts as a poison to the invented catalyst components and is excluded during preparation. Further, the catalysts of such patents exhibit low activities as compared to the invented catalysts.

Description of the invention

Briefly, the alpha-olefin polymerization catalyst of this invention comprises—as already mentioned in the introduction—(A) an organometallic promoter; and (B) a solid, hydrocarbon insoluble component which is the reaction product of components comprising (1) at least one compound of Group IVB, VB, or VIB metal, (2) at least one divalent metal salt of a phosphorus acid ester having at least one phosphorus acid ester group bonded to metal through oxygen or sulfur, and (3) at least one alkylaluminum halide, and this catalyst is characterized in that said reaction product (B) is prepared by carrying out the reaction

(A) at an atomic ratio of metal contained in (1) to metal contained in (2) from 0.05:1 to 10:1 and at an amount of (3) that total moles of halogen to metal bonds in (3), (1) and (2) is at least equal to the product of the molar amount of the metal of component (1) employed and the valency of such metal of component (1) plus two times the molar amount of divalent metal component (2) employed

(B) such that components (1) and (2) are reacted in a first step followed by reaction of the result with component (3) or such that components (2) and (3) are reacted in a first step followed by reaction of the result with component (1), and

(C) under substantial absence of oxygen, water, carbondioxide and other catalyst poisons.

Compounds of the Group IVB, VB, and VIB metals which are useful in preparation of the solid, hydrocarbon insoluble, supported components of this invention include metal halides, oxohalides, and alkoxides, oxoalkoxides, alkoxyhalides, and oxoalkoxyhalides containing 1 to 20 carbon atoms per alkoxy radical such as methoxy, butoxy, octoxy, decoxy, tetradecoxy, and eicosoxy. Mixtures of compounds of the same or different metals also can be employed. Useful metals include tetravalent titanium, tetravalent zirconium, trivalent vanadium, tetravalent vanadium, and pentavalent vanadium.

Preferably, the Group IVB, VB, or VIB metal component employed according to the invention comprises at least one titanium (IV) chloride, bromide, alkoxide, alkoxychloride, or alkoxybromide wherein each alkoxy radical contains from 1 to 10 carbon atoms; at least one zirconium (IV) chloride, bromide, alkoxide, alkoxychloride, or alkoxybromide wherein each alkoxy radical contains from 1 to 10 carbon atoms; at least one vanadium (III) or (IV) chloride, bromide, alkoxide, alkoxychloride or alkoxybromide wherein each alkoxy radical contains from 1 to 10 carbon atoms; at least one vanadium (IV) or (V) oxochloride, oxobromide, oxoalkoxide, oxoalkoxychloride, or oxoalkoxybromide wherein each alkoxy radical contains 1 to 10 carbon atoms; or a mixture thereof.

Specific examples of Group IVB, VB, and VIB metal compounds include

$TiCl_4$, $TiBr_4$, $Ti(OCH_3)Br_3$, $Ti(OC_4H_9)Cl_3$, $Ti(OC_6H_{13})Cl_3$, $Ti(OC_{10}H_{21})Cl_3$,

$Ti(OCH_3)_2Cl_2$, $Ti(OC_4H_9)_2Cl_2$, $Ti(OC_6H_{13})_2Cl_2$, $Ti(OC_{10}H_{21})_2Br_2$, $Ti(OCH_3)_3Br$, $Ti(OC_4H_9)_3Cl$,

$Ti(OC_6H_{13})_3Cl$, $Ti(OC_{10}H_{21})_3Cl$, $Ti(OCH_3)_4$, $Ti(OC_4H_9)_4$, $Ti(OC_6H_{13})_4$, $Ti(OC_{10}H_{21})_4$,

$ZrCl_4$, $ZrBr_4$, $Zr(OCH_3)Cl_3$, $Zr(OC_4H_9)Cl_3$, $Zr(OC_6H_{13})Br_3$, $Zr(OC_{10}H_{21})Cl_3$,

$Zr(OCH_3)_2Br_2$, $Zr(OC_4H_9)_2Cl_2$, $Zr(OC_6H_{13})_2Cl_2$, $Zr(OC_{10}H_{21})_2Cl_2$, $Zr(OCH_3)_3Cl$, $Zr(OC_4H_9)_3Cl$,

$Zr(OC_6H_{13})_3Cl$, $Zr(OC_{10}H_{21})_3Br$, $Zr(OCH_3)_4$, $Zr(OC_4H_9)_4$, $Zr(OC_6H_{13})_4$, $Zr(OC_{10}H_{21})_4$,

$VCl_3$, $VBr_3$, $V(OCH_3)Cl_2$, $V(OC_4H_9)Cl_2$, $V(OC_6H_{13})Cl_2$, $V(OC_{10}H_{21})Br_2$,

$V(OCH_3)_2Br$, $V(OC_4H_9)_2Cl$, $V(OC_6H_{13})_2Cl$, $V(OC_{10}H_{21})_2Cl$, $V(OCH_3)_3$, $V(OC_4H_9)_3$,

$V(OC_6H_{13})_3$, $V(OC_{10}H_{21})_3$, $VCl_4$, $VBr_4$, $V(OCH_3)Cl_3$, $V(OC_4H_9)Cl_3$,

$V(OC_6H_{13})Cl_3$, $V(OC_{10}H_{21})Cl_3$, $V(OCH_3)_2Br_2$, $V(OC_4H_9)_2Cl_2$, $V(OC_6H_{13})_2Br_2$, $V(OC_{10}H_{21})_2Cl_2$,

$V(OCH_3)_3Br$, $V(OC_4H_9)_3Cl$, $V(OC_6H_{13})_3Cl$, $V(OC_{10}H_{21})_3Br$, $V(OCH_3)_4$, $V(OC_4H_9)_4$,

$V(OC_6H_{13})_4$, $V(OC_{10}H_{21})_4$, $VOCl_2$, $VOBr_2$, $VO(OCH_3)Cl$, $VO(OC_4H_9)Br$, $VO(OC_6H_{13})Cl$, $VO(OC_{10}H_{21})Br$, $VO(OCH_3)_2$, $VO(OC_4H_9)_2$, $VO(OC_6H_{13})_2$, $VO(OC_{10}H_{21})_2$, $VOCl_3$, $VOBr_3$, $VO(OCH_3)Cl_2$, $VO(OC_4H_9)Cl_2$, $VO(OC_6H_{13})Br_2$, $VO(OC_{10}H_{21})Cl_2$, $VO(OCH_3)_2Br$, $VO(OC_4H_9)_2Cl$, $VO(OC_6H_{13})_2Cl$, $VO(OC_{10}H_{21})_2Br$, $VO(OCH_3)_3$, $VO(OC_4H_9)_3$, $VO(OC_6H_{13})_3$, and $VO(OC_{10}H_{21})_3$.

Certain of the alkoxides, alkoxyhalides, oxoalkoxides, and oxoalkoxyhalides are commonly available in the form of complexes with an alcohol. An example is $Zr(OC_4H_9)_4 \cdot {}_4H_9OH$. For purposes hereof, the terms alkoxide, alkoxyhalide, oxoalkoxide, and oxoalkoxyhalide and the specific examples set forth above are intended to include such complexes.

From the standpoint of activity, titanium tetrachloride and titanium (IV) alkoxides, and alkoxychlorides having 1 to 6 carbon atoms per alkoxy radical, and particularly the alkoxides, give best results. Titanium tetrabutoxide is most preferred in this regard. From the standpoint of maximizing polyalpha-olefin molecular weight distributions while ensuring relatively high activities, best results are achieved through the use of mixtures of at least one titanium (IV) chloride, alkoxide, or alkoxychloride of 1 to 6 carbon atoms per alkoxy radical with at least one zirconium (IV) chloride, alkoxide, or alkoxychloride of 1 to 6 carbon atoms per alkoxy radical and/or vanadium (III), (IV), or (V) compound selected from the group consisting of the chlorides, oxochlorides, alkoxides, oxoalkoxides, alkoxychlorides, and oxoalkoxychlorides having 1 to 6 carbon atoms per alkoxy radical. Mixtures of titanium tetraalkoxides and zirconium tetraalkoxides, and particularly the butoxides, wherein the atomic ratio of zirconium to titanium ranges from 0.1:1 to 10:1 are most preferred from the standpoint of maximizing molecular weight distributions while maintaining high activities.

Support materials useful in preparation of the solid, hydrocarbon insoluble, supported components of the invented catalysts are divalent metal salts of phosphorus acid esters having at least one phosphorus acid ester group bonded to metal through oxygen or sulfur. Preferably, the second group bonded to metal is the identical phosphorus acid ester group bonded through oxygen or sulfur, however, other groups such as different phosphorus acid ester groups bonded through oxygen or sulfur as well as alkyl, aryl, alkoxy, aryloxy, carboxylate, carbonate, inorganic phosphate, sulfate, halide, hydoxyl, or other suitable groups also can constitute the second group bonded to metal.

For purposes hereof, a phosphorus acid ester group bonded to metal through oxygen or sulfur can be represented by the formula

$$—M—Y—\overset{\overset{\displaystyle Y}{\|}}{P}(YR)A$$

In the formula, M is a divalent Group IIA, IIB, IVA, VIIB, or VIII metal such as beryllium, magnesium, calcium, zinc, cadmium, tin, manganese, iron, or cobalt, with magnesium, manganese, and iron being preferred and magnesium most preferred. Each Y in the formula is independently oxygen or sulfur, with oxygen being preferred. A in the formula is hydrogen, —YH, R, or —YR, and each R is independently an organic radical or a halo- or amino-substituted organic radical, said organic radical being an alkyl radical of 1 to 12 carbon atoms, such as methyl, ethyl, butyl, octyl, and dodecyl, an aryl radical of 6 to 10 carbon atoms, such as phenyl and naphthyl, or an alkaryl or aralkyl radical of 7 to 12 carbon atoms such as tolyl, cresyl, ethylphenyl, butylphenyl, hexylphenyl, phenylethyl, and phenylbutyl. Preferably, R is an alkyl radical of 1 to 6 carbon atoms.

Examples of the above-described phosphorus acid ester groups bonded through oxygen or sulfur include organophosphite groups such as methyl phosphite and phenyl phosphite; organo thiophosphite groups such as butyl thiophosphite and tolyl thiophosphite; organo thionophosphite groups such as ethyl thionophosphite and cresyl thionophosphite; organo thiothionophosphite groups such as methyl thiothionophosphite and hexyl thiothionophosphite; mono- and diorgano orthophosphate groups such as ethyl orthophosphate, diethyl orthophosphate, butyl orthophosphate, dibutyl orthophosphate, phenyl orthophosphate, and diphenyl orthophosphate; mono- and diorgano mono- and dithiophosphate groups such as methyl thiophosphate, dimethyl thiophosphate, dimethyl dithiophosphate, decyl thiophosphate, didecyl thiophosphate, and didecyl dithiophosphate; mono- and diorgano thionophosphate groups such as octyl thionophosphate, dioctyl thionophosphate, naphthyl thionophosphate, and dinaphthyl thionophosphate; mono- and diorgano mono- and dithiothionophosphate groups such as ethyl thiothionophosphate, diethyl thiothionophosphate, diethyl dithiothionophosphate, dodecyl thiothionophosphate, didodecyl thiothionophosphate, and didodecyl dithiothionophosphate; organo organophosphonate groups such as ethyl ethylphosphonate, 2-chloroethyl 2-chloroethylphosphonate, ethyl butylphosphonate, octyl octylphosphonate, phenyl phenylphosphonate, and phenylethyl ethylphosphonate; organo thioorganophosphonate groups such as methyl thiomethylphosphonate,

butyl thiobutylphosphonate, and tolyl thiotolylphosphonate; organo organothionophosphonates such as ethyl methylthionophosphonate, hexyl hexylthionophosphonate, and decyl decylthionophosphonate; and organo thioorganothionophosphonate groups such as ethyl thioethylthionophosphonate, ethyl thiohexylthionophosphonate, and phenyl thiophenylthionophosphonate.

Phosphorus acid ester salts which are preferred for use according to this invention are those of magnesium, manganese (II), and iron (II) wherein both groups bonded to metal are identical phosphorus acid ester groups bonded through oxygen or sulfur. More preferably, phosphorus acid ester salts wherein the organic radicals contain from 1 to 6 carbon atoms are employed. Due to the toxicity of the thio-, thiono-, and thiothionoesters, the alkyl phosphite, mono- and dialkyl orthophosphate, and alkyl alkylphosphonate salts containing 1 to 6 carbon atoms per alkyl radical are particularly preferred. Specific examples of such salts include the bis(methyl phosphite), bis(butyl phosphite), bis(ethyl orthophosphate), bis(diethyl orthophosphate), bis(butyl orthophosphate), bis(dibutyl orthophosphate), bis(hexyl orthophosphate), bis(dihexyl orthophosphate), bis(methyl methylphosphonate), bis(ethyl ethylphosphonate), and bis(hexyl hexylphosphonate) salts of magnesium, manganese (II) and iron (II).

Among the above-described phosphorus acid ester salts, the bis(dialkyl orthophosphate) salts of magnesium, manganese (II), and iron (II) having 1 to about 6 carbon atoms per alkyl radical are most preferred. From the standpoint of catalytic activity, the bis(dialkyl orthophosphate) salts of magnesium and manganese (II), and especially the former, give best results. Maximum activity is attained through the use of magnesium bis(diethyl orthophosphate).

The above-described salts of phosphorus acid esters are known compounds and can be prepared according to known methods such as by reacting appropriate metal halides with appropriate phosphorus acid esters or thioesters as reported in Mikulski, C. M., et al., *Chem. Abs.,* vol. 80 p. 518 (1974) and Mikulski, C. M., et al. *Chem. Abs.,* vol. 75, pp. 485—6 (1971); and by reacting phosphorous pentoxide, halides of appropriate metals, and hydroxyl group-containing organic compounds as disclosed in U.S. Patent No. 3,401,184, to Revukas. When such preparative methods are employed, care should be taken to dry the metal halides employed as starting materials, such as by heating or contacting with a chemical drying agent such as thionyl chloride. It also is advisable to carry out the preparation under anhydrous conditions and to substantially remove hydrogen halide and/or organic halide reaction by-products from the products prior to use thereof as support materials according to the present invention to ensure that oxygen, water, and halogen-containing by-products, which can adversely affect the activity of the invented catalysts, are excluded during preparation of catalyst components. Anhydrous conditions can be maintained during preparation of support materials by carrying out the preparation under an atmosphere of an inert gas such as nitrogen or by other suitable means. Reaction by-products are suitably removed by washing with appropriate solvents such as hexane, heptane, octane, nonane, and benzene.

A preferred method for preparing support materials useful according to this invention, and particularly the phosphorus acid ester salts wherein both groups bonded to metal are phosphorus acid ester groups bonded through oxygen or sulfur comprises reacting at least one metal salt of an organic acid with at least one phosphorus acid ester in amounts such that a phosphorus acid ester salt having at least one phosphorus acid ester group bonded to metal through oxygen or sulfur is produced, and at a temperature such that the metal acid salt and the phosphorus acid ester will react without substantial decomposition of the phosphorus acid ester. Advantageously, the metal acid salts employed as starting materials are easier to dry and maintain in anhydrous condition than the metal halides employed according to the above-described preparations. Further the primary reaction by-products produced according to this method are organic acid esters which are more easily removed than are the halogen-containing by-products produced according to the above-described preparative methods. This method is particularly advantageous in the preparation of phosphorus acid ester salts wherein the organic radicals are alkyl radicals of 1 to 6 carbon atoms because the metal acid salts and phosphorus acid esters employed as starting materials are such that low boiling organic acid ester by-products are formed. These by-products can be conveniently and substantially removed during the preparation through the use of appropriate temperatures and as a result, support materials of high purity can be prepared at high production rates.

The metal acid salts employed as starting materials according to the above method are selected on the basis of the phosphorus acid ester salt desired. Suitable metal acid salts include the divalent Group IIA, IIB, IVA, VIIB, and VIII metals salts of aliphatic acids having 2 to 20 carbon atoms, aromatic acids having 7 to 12 carbon atoms, and aliphatically-substituted aromatic acids and aryl-substituted aliphatic acids having 8 to 20 carbon atoms. Salts of monocarboxylic acids are preferred although salts of di-, tri-, and tetracarboxylic acids also are suitable. Specific examples of divalent Group IIA, IIB, IVA, VIIB, and VIII metals include magnesium, calcium, zinc, cadmium, tin, manganese, iron, and cobalt.

Specific examples of the organic acid groups bonded to the aforesaid metals include aliphatic acid groups of 2 to 20 carbon atoms such as acetate, oxalate, propionate, malonate, acrylate, butyrate, succinate, crotonate, vinylacetate, maleate, hydrosorbate, octoate, suberate, laurate, palmitate, stearate, oleate, linoleate, arachidate, and arachidonate; aromatic acid groups of 7 to 12 carbon atoms such as benzoate, phthalate, trimellitate, naphthoate, and naphthalate; and aliphatically-substituted aromatic acid groups and aryl-substituted aliphatic acid groups of 8 to 20 carbon atoms such as

toluate, xylilate, ethylbenzoate, diethylbenzoate, butylbenzoate, hexylbenzoate, decylbenzoate, tetradecylbenzoate, phenacetate, phenylbutyrate, phenylvalerate, and phenyllaurate. Certain of the unsaturated acid salts, such as the acrylates and methacrylates, tend to polymerize on heating. To avoid polymerization, it is contemplated to employ a conventional polymerization inhibitor in conjunction with such salts and/or to avoid exposure of the salts to polymerizing temperatures.

Specific examples of useful metal salts include magnesium acetate, magnesium oxalate, magnesium butyrate, magnesium vinylacetate, magnesium octoate, magnesium laurate, magnesium oleate, magnesium benzoate, magnesium trimellitate, magnesium toluate, magnesium hexylbenzoate, magnesium phenacetate, calcium acetate, calcium malonate, calcium stearate, zinc acetate, zinc maleate, zinc stearate, zinc trimellitate, zinc phenacetate, manganous acetate, manganous propionate, manganous octoate, manganous succinate, manganous oleate, manganous benzoate, manganous toluate, manganous phenacetate, ferrous acetate, ferrous maleate, ferrous benzoate, and ferrous phenacetate.

As can be appreciated, the particular metal salt to be employed as a starting material will vary depending upon the desired final product. Mixtures of salts of the same or different metals can be employed if desired. The preparation involves replacement of organic acid groups with phosphorus acid ester groups and formation of organic acid ester by-products which can adversely affect catalytic activity. Accordingly, irrespective of the metal contained in the metal salt, it is preferred to employ materials wherein the organic acid groups bonded to the metal are such as to lead to formation of low boiling organic acid ester by-products to facilitate removal thereof. Preferred metal salts are those of calcium, magnesium, manganese (II) and iron (II) wherein the organic acid groups are alkanoic acid groups of 2 to 6 carbon atoms such as acetate, propionate, butyrate, valerate, and caproate. Most preferably, the metal salts employed as starting materials are metal acetates. Specific examples of useful metal acetates include magnesium acetate, calcium acetate, zinc acetate, manganous acetate and ferrous acetate.

In order to avoid contamination of support materials with water and other catalyst poisons, the above-described metal salts are employed in the anhydrous state and to this end, drying of the salts prior to use is desirable, particularly with respect to salts of the Group IIB and VIIB metals as these are commonly obtained in the hydrated form. Known drying techniques, such as heating or contacting with a chemical drying agent can be employed. When a chemical drying agent is employed it is preferred to use materials, such as carboxylic acid anhydrides, which give by-products which are easily removed from the anhydrous metal salts. Acetic anhydride is particularly useful in this regard.

Phosphorus acid esters useful according to the above method are compounds of the formula $Y{=}P(YR)_2A$, wherein each Y is independently oxygen or sulfur; A is hydrogen, —YH, —YR, or R; and each R is independently an organic radical or an amino- or halo-substituted organic radical, such organic radicals being selected from the group consisting of alkyl radicals of 1 to 12 carbon atoms, aryl radicals of 6 to 10 carbon atoms, and aralkyl and alkaryl radicals of 7 to 12 carbon atoms. Such compounds include the diorgano phosphites ($O{=}P(OR)_2H$); diorgano mono- and dithiophosphites ($O{=}P(OR)(SR)H$ and $O{=}P(SR)_2H$); diorgano thionophosphites ($S{=}P(OR)_2H$); diorgano mono- and dithiothionophosphites ($S{=}P(OR)(SR)H$ and $S{=}P(SR)_2H$); diorgano orthophosphates ($O{=}P(OR)_2(OH)$); diorgano mono-, di- and trithiophosphates ($O{=}P(OR)(SR)(OH)$, $O{=}P(OR)_2(SH)$, $O{=}P(SR)_2(OH)$, $O{=}P(OR)(SR)(SH)$, and $O{=}P(SR)_2(SH)$); diorgano thionophosphates ($S{=}P(OR)_2(OH)$); diorgano mono-, di- and trithiothionophosphates ($S{=}P(OR)(SR)(OH)$, $S{=}P(OR)2(SH)$, $S{=}P(SR)_2(OH)$, $S{=}P(OR)(SR)(SH)$, and $S{=}P(SR)_2(SH)$); triorgano orthophosphates ($O{=}P(OR)_3$); triorgano mono-, di-, and trithiophosphates ($O{=}P(OR)_2(SR)$, $O{=}P(OR)(SR)_2$, and $O{=}P(SR)_3$); triorgano thionophosphates ($S{=}P(OR)_3$); triorgano mono-, di-, and trithiothionophosphates ($S{=}P(OR)_2(SR)$, $S{=}P(OR)(SR)_2$, and $S{=}P(SR)_3$); diorgano organophosphonates ($O{=}P(OR)_2R$); diorgano mono- and dithioorganophosphonates ($O{=}P(OR)(SR)R$ and $O{=}P(SR)_2R$); diorgano organothionophosphonates ($S{=}P(OR)_2R$); and diorgano mono- and dithioorganothionophosphonates ($S{=}P(OR)(SR)R$ and $S{=}P(SR)_2R$). Mixtures of phosphorus acid esters also can be employed.

Specific examples of diorgano phosphites include dimethyl phosphite, diethyl phosphite, di-2-aminoethyl phosphite, dihexyl phosphite, hexyl decyl phosphite, didecyl phosphite, didodecyl phosphite, diphenyl phosphite, dichlorophenyl phosphite, dinaphthyl phosphite, ethyl phenyl phosphite, ditolyl phosphite, dimethylphenyl phosphite, dihexylphenyl phosphite, and diphenylhexyl phosphite.

Specific examples of diorgano mono- and dithiophosphites include dimethyl thiophosphite and dithiophosphite, diethyl thiophosphite and dithiophosphite, ethyl butyl thiophosphite and dithiophosphite, dihexyl thiophosphite and dithiophosphite, didodecyl thiophosphite and dithiophosphite, diphenyl thiophosphite and dithiophosphite, phenyl hexyl thiophosphite and dithiophosphite, diphenylhexyl thiophosphite and dithiophosphite, and dioctylphenyl thiophosphite and dithiophosphite.

Specific examples of diorgano thionophosphites include dimethyl thionophosphite, diethyl thionophosphite, dioctyl thionophosphite, octyl decyl thionophosphite, didodecyl thionophosphite, ethyl phenyl thionophosphite, diphenyl thionophosphite, ditolyl thionophosphite, and dihexylphenyl thionophosphite.

Specific examples of diorgano mono- and dithiothionophosphites include dimethyl thiothionophosphite and dithiothionophosphite, diethyl thiothionophosphite and dithiothionophosphite, dibutyl thiothionophosphite and dithiothionophosphite, butyl hexyl thiothionophosphite and dithiothionophosphite, diethylhexyl thiothionophosphite and dithiothionophosphite, didecyl thiothionophosphite and dithiothionophosphite, didodecyl thiothionophosphite and dithiothionophosphite, diphenyl thiothionophosphite and dithiothionophosphite, diaminophenyl thiothionophosphite and dithiothionophosphite, ethyl phenyl thiothionophosphite and dithiothionophosphite, diphenylethyl thiothionophosphite and dithiothionophosphite, diphenylhexyl thiothionophosphite and dithiothionophosphite, and dihexylphenyl thiothionophosphite and dithiothionophosphite.

Specific examples of di- and triorgano orthophosphates include di- and trimethyl orthophosphate, di- and triethyl orthophosphate, di- and tributyl orthophosphate, di- and trihexyl orthophosphate, di- and tridecyl orthophosphate, di- and tridodecyl orthophosphate, di- and triphenyl orthophosphate, ethyl phenyl orthophosphate, ethyl diphenyl orthophosphate, di- and trichlorophenyl orthophosphate, di- and triphenylbutyl orthophosphate, di- and trihexylphenyl orthophosphate, di- and triphenylethyl orthophosphate, and di- and triphenylhexyl orthophosphate.

Specific examples of di- and triorgano mono-, di-, and trithiophosphates include O,O-dimethyl thiophosphate ($O{=}P(OCH_3)_2(SH)$), O,S-dimethyl thiophosphate ($O{=}P(OCH_3)(SCH_3)(OH)$), O,S-dimethyldithiophosphate ($O{=}P(OCH_3)(SCH_3)(SH)$), S,S-dimethyl dithiophosphate ($O{=}P(SCH_3)_2(OH)$), dimethyl trithiophosphate ($O{=}P(SCH_3)_2(SH)$), trimethyl thiophosphate, dithiophosphate, and trithiophosphate O,O-diethyl thiophosphate, O,S-diethyl dithiophosphate, diethyl trithiophosphate, triethyl thiophosphate, dithiophosphate, and trithiophosphate, O-ethyl S-pentyl thiophosphate, O-ethyl S-pentyl dithiophosphate, ethyl pentyl trithiophosphate, O,O-diethyl S-pentyl thiophosphate, O,S-diethyl O-pentyl thiophosphate, O,S-diethyl S-pentyl dithiophosphate, S,S-diethyl O-pentyl dithiophosphate, diethyl pentyl trithiophosphate, O,S-dichloroethylhexyl thiophosphate, S,S-dichloroethylhexyl dithiophosphate, trichloroethylhexyl thiophosphate, dithiophosphate, and trithiophosphate, O,S-didodecyl thiophosphate, O,S-didodecyl dithiophosphate, didodecyl trithiophosphate, tridodecyl thiophosphate, dithiophosphate, and trithiophosphate, O,O-diphenyl thiophosphate, O,S-diphenyl thiophosphate, O,S-diphenyl dithiophosphate, S,S-diphenyl dithiophosphate, diphenyl trithiophosphate, triphenyl thiophosphate, dithiophosphate, and trithiophosphate, O,S-diphenylbutyl thiophosphate, S,S-diphenylbutyl dithiophosphate, triphenylbutyl thiophosphate, dithiophosphate, and trithiophosphate, O,O-dihexylphenyl thiophosphate, O,S-dihexylphenyl dithiophosphate, dihexylphenyl trithiophosphate, and trihexylphenyl thiophosphate, dithiophosphate, and trithiophosphate.

Specific examples of di- and triorgano thionophosphates include di- and trimethyl thionophosphate, di- and triethyl thionophosphate, di- and tributyl thionophosphate, di- and trihexyl thionophosphate, di- and tridodecyl thionophosphate, di- and triphenyl thionophosphate, ethyl phenyl thionophosphate, ethyl diphenyl thionophosphate, di- and trichlorophenyl thionophosphate, di- and triphenylbutyl thionophosphate, di- and trihexylphenyl thionophosphate, di- and triphenylethyl thionophosphate, and di- and triphenylhexyl thionophosphate.

Specific examples of di- and triorgano mono-, di-, and trithiothionophosphates include O,O-dimethyl thiothionophosphate, O,S-dimethyl thiothionophosphate, O,S-dimethyl dithiothionophosphate, S,S-dimethyl dithiothionophosphate, dimethyl trithiothionophosphate, trimethyl thiothionophosphate, dithiothionophosphate, and trithiothionophosphte, O,O-diethyl thiothionophosphate, O,S-diethyl dithiothionophosphate, diethyl trithiothionophosphate, triethyl thiothionophosphate, dithiothionophosphate, and trithiothionophosphate, O-ethyl S-pentyl thiothionophosphate, O-ethyl S-pentyl dithiothionophosphate, O,O-diethyl S-pentyl thiothionophosphate, O,S-diethyl O-pentyl thiothionophosphate, O,S-diethyl S-pentyl dithiothionophosphate, S,S-diethyl O-pentyl dithiothionophosphate, diethyl pentyl trithiothionophosphate, O,O-dichloroethylhexyl thiothionophosphate, S,S-dichloroethylhexyl dithiothionophosphate, dichloroethylhexyl trithionothionophosphate, trichloroethylhexyl thiothionophosphate, dithiothionophosphate, and trithiothionophosphate, O,S-didodecyl thiothionophosphate, O,S-didodecyl dithiothionophosphate, tridodecyl thiothionophosphate, dithiothionophosphate, and trithiothionophosphate, O,O-diphenyl thiothionophosphate, O,S-diphenyl thiothionophosphate, O,S-diphenyl dithiothionophosphate, S,S-diphenyl dithiothionophosphate, diphenyl trithiothionophosphate, triphenyl thiothionophosphate, dithiothionophosphate, and trithiothionophosphate, O,O-diphenylbutyl thiothionophosphate, O,S-diphenylbutyl dithiothionophosphate, triphenylbutyl thiothionophosphate, dithiothionophosphate, and trithiothionophosphate, O,S-dihexylphenyl thiothionophosphate, S,S-dihexylphenyl dithiothionophosphate, dihexylphenyl trithiothionophosphate and trihexylphenyl thiothionophosphate, dithiothionophosphate, and trithiothionophosphate.

Specific examples of diorgano organophosphonates include dimethyl methylphosphonate, dimethyl ethylphosphonate, diethyl methylphosphonate, diethyl ethylphosphonate, dichloroethyl chloroethylphosphonate, dibutyl butylphosphonate, dihexyl ethylphosphonate, dihexyl hexylphosphonate, dinonyl nonylphosphonate, didodecyl dodecylphosphonate, diethyl phenylphosphonate, ethyl hexyl phenylphosphonate, diphenyl ethylphosphonate, ethyl phenyl phenylphosphonate, diphenyl phenylphosphonate, diethylphenyl phenylphosphonate, dibutylphenyl butylphenylphosphonate, dihexylphenyl hexylphenylphosphonate, diphenylethyl phenylethylphosphonate, diphenylhexyl phenylphosphonate, and hexyl phenylhexyl phenylhexylphosphonate.

Specific examples of diorgano mono- and dithioorganophosphonates include dimethyl

thiomethylphosphonate and dithiomethylphosphonate, dimethyl thioethylphosphonate and dithioethylphosphonate, diethyl thiomethylphosphonate and dithiomethylphosphonate, diethyl thioethylphosphonate and dithioethylphosphonate, dichloroethyl thiochloroethylphosphonate and dithiochloroethylphosphonate, dibutyl thiobutylphosphonate and dithiobutylphosphonate, dihexyl thiohexylphosphonate and dithiohexylphosphonate, didodecyl thiododecylphosphonate and dithiododecylphosphonate, diethyl thiophenylphosphonate and dithiophenylphosphonate, ethyl hexyl thiophenylphosphonate and dithiophenylphosphonate, diphenyl thioethylphosphonate and dithioethylphosphonate, ethyl phenyl thiophenylphosphonate and dithiophenylphosphonate, diphenyl thiophenylphosphonate and dithiophenylphosphonate, diethylphenyl thiophenylphosphonate and dithiophenylphosphonate, dihexylphenyl thiohexylphenylphosphonate and dithiohexylphenylphosphonate, diphenylethyl thiophenylethylphosphonate and dithiophenylethylphosphonate, and hexyl hexylphenyl thiophenylphosphonate and dithiophenylphosphonate.

Specific examples of diorgano organothionophosphonates include dimethyl methylthionophosphonate, dimethyl ethylthionophosphonate, diethyl methylthionophosphonate, diethyl ethylthionophosphonate, dichloroethyl chloroethylthionophosphonate, dibutyl butylthionophosphonate, dihexyl ethylthionophosphonate, dihexyl hexylthionophosphonate, dinonyl nonylthionophosphonate, didodecyl dodecylthionophosphonate, diethyl phenylthionophosphonate, ethyl hexyl phenylthionophosphonate, diphenyl ethylthionophosphonate, ethyl phenyl phenylthionophosphonate, diphenyl phenylthionophosphonate, diethylphenyl phenylthionophosphonate, dibutylphenyl butylphenylthionophosphonate, dihexylphenyl hexylphenylthionophosphonate, diphenylethyl phenylethylthionophosphonate, diphenylhexyl phenylthionophosphonate, and hexyl phenylhexyl phenylhexylthionophosphanate.

Specific examples of diorgano mono- and dithioorganothionophosphonates include dimethyl thiomethylthionophosphonate and dithiomethylthionophosphonate, dimethyl thioethylthionophosphonate and dithioethylthionophosphonate, diethyl thiomethylthionophosphonate and dithiomethylthionophosphonate, diethyl thioethylthionophosphonate and dithioethylthionophosphonate, dichloroethyl thiochloroethylthionophosphonate, and dithiochloroethylthionophosphonate, dibutyl thiobutylthionophosphonate and dithiobutylthionophosphonate, dihexyl thiohexylthionophosphonate and dithiohexylthionophosphonate, didodecyl thiododecylthionophosphonate and dithiododecylthionophosphonate, diethyl thiophenylthionophosphonate and dithiophenylthionophosphonate, ethyl hexyl thiophenylthionophosphonate and dithiophenylthionophosphonate, diphenyl thioethylthionophosphonate and dithioethylthionophosphonate, ethyl phenyl thiophenylthionophosphonate and dithiophenylthionophosphonate, diphenyl thiophenylthionophosphonate and dithiophenylthionophosphonate, diethylphenyl thiophenylthionophosphonate and dithiophenylthionophosphonate, dihexylphenyl thiohexylphenylthionophosphonate and dithiohexylphenylthionophosphonate, diphenylethyl thiophenylethylthionophosphonate and dithiophenylethylthionophosphonate, and hexyl hexylphenyl thiophenylthionophosphonate and dithiophenylthionophosphonate.

The particular phosphorus acid ester to be employed according to the above method will vary depending on the desired final product. As noted above, preferred support materials are phosphorus acid ester salts wherein the organic radicals are alkyl radicals of 1 to 6 carbon atoms. In preparation of these salts, phosphorus acid esters employed as starting materials are those wherein each R in the formula $Y{=}P(YR)_2A$ is an alkyl radical of 1 to 6 carbon atoms. Specific examples of phosphorus acid esters wherein each R in the formula $Y{=}P(YR)_2A$ is an alkyl radical of 1 to 6 carbon atoms include the dimethyl, diethyl, dipropyl, dibutyl, dipentyl, and dihexyl phosphites, mono- and dithiophosphites, thionophosphites, mono- and dithiothionophosphites, orthophosphates, mono-, di-, and trithiophosphates, thionophosphates, mono-, di-, and trithiothionophosphates, the trimethyl, triethyl, tripropyl, tributyl, tripentyl, and trihexyl orthophosphates, mono-, di-, and trithiophosphates, thionophosphates, and mono-, di-, and trithiothionophosphates, and the dimethyl, diethyl, dipropyl, dibutyl, dipentyl and dihexyl alkylphosphonates, mono- and dithioalkylphosphonates, alkylthionophosphonates, and mono- and dithioalkylthionophosphonates wherein the alkyl groups are methyl, ethyl, propyl, butyl, pentyl, or hexyl. Also as described above, the phosphite, orthophosphate, and alkylphosphonate salts are preferred over the sulfur-containing phosphorus acid ester salts. Phosphorus acid esters wherein each Y in the formula $Y{=}P(YR)_2A$ is oxygen are employed in preparation of such materials. The support materials which are most preferred according to this invention are the dialkyl orthophosphate salts, and particularly the diethyl orthophosphate salts, and accordingly, the phosphorus acid esters used in preparation of these materials are the trialkyl orthophosphates, and particularly, triethyl orthophosphate.

The above-described starting materials are employed in amounts such that the equivalent ratio of phosphorus acid ester to metal-carboxylate bonds in the metal acid salt ranges from 0.5:1 to 10:1, and preferred from 1:1 to 10:1. Advantageously, an excess of the phosphorus acid ester is employed because reaction rates are thereby increased. However, the excess should not be so great as to cause difficulties in removing unreacted phosphorus acid ester because the same can adversely affect catalyst activity. Accordingly, the equivalent ratios of phosphorus acid ester to metal-carboxylate bonds range from 1.1:1 to 6:1. Most preferably, this ratio ranges from 1.1:1 to 3:1.

The preparative reaction is carried out at reaction temperatures range from 0 to 150°C, with

temperatures in the upper portion of the range being more preferred in order to increase reaction rates. Advantageously, in the preparation of support materials wherein the organic radicals are alkyl radicals of 1 to 6 carbon atoms from metal acetates and phosphorus acid esters wherein each R in the formula $Y{=}P(YR)_2A$ is an alkyl radical of 1 to 6 carbon atoms, the organic acid esters formed as reaction by-products are materials which boil below 150°C. Accordingly, such materials can be conveniently and substantially removed during preparation of the support material by conducting the preparation at temperatures ranging from that which is sufficient to distill the organic acid ester by-product up to 150°C. In preparation of the diethyl orthophosphate salts from metal acetates and triethyl orthophosphate reaction temperatures most preferably range from 70 to 150°C. When the starting materials are selected such that low boiling organic acid ester by-products are formed and such materials are removed during the preparation through the use of suitable temperatures, substantial completion of the preparative reaction will be indicated by the cessation of by-product evolution. In general, reaction times range from several minutes to several hours, and preferably, from 1 to 20 hours. More preferably, the reaction is carried out over a period of 1 to 10 hours.

The preparative reaction can be carried out neat or in the presence of a diluent which is liquid at reaction temperatures and substantially inert to the starting materials. Useful diluents include alkanes, such as hexane, heptane, octane, nonane, decane; cycloalkanes, such as cyclohexane; aromatics, such as benzene and ethylbenzene; and hydrogenated and halogenated aromatics such as tetrahydronaphthalene, decahydronaphthalene, and *o*-dichlorobenzene.

The preparative reaction according to the above method is carried out under substantially anhydrous conditions to avoid contamination of the support materials with materials capable of adversely affecting catalyst activity. Conveniently, anhydrous conditions are maintained by carrying out the preparation under an atmosphere of an inert gas such as nitrogen. Drying of the metal salts of organic acids to be employed in the preparation is desirable in this regard as is purification of any diluent to be employed, such as by percolation through molecular sieves and/or silica gel.

As a result of the above-described preparation, there are obtained divalent metal salts of phosphorus acid esters and by-product organic acid esters. As noted above, when the starting materials have been selected such that low boiling organic acid ester by-products are formed, the same are conveniently removed during the preparation through the use of suitable temperatures. By-product removal also can be achieved by decantation, filtration, and through the use of reduced pressures. After removal of reaction by-products, and prior to use as support materials according to this invention, the phosphorus acid ester salt preferably is washed with an inert hydrocarbon such as hexane or another alkane to remove incompletely reacted starting materials.

Alkylaluminum halides useful in preparation of the solid, hydrocarbon insoluble, supported catalyst components of this invention are compounds of the empirical formula $AlR'_mX_{3-m}$ wherein R' is an alkyl radical of 1 to 20 carbon atoms, such as methyl, ethyl, butyl, hexyl, decyl, and eicosyl, X is halogen and preferably chlorine or bromine, and m is greater than 0 and less than 3, preferably from 1 to 2. Mixtures also can be employed. Preferred alkylaluminum halides are those wherein each alkyl radical contains 2 to 12 carbon atoms. Such compounds include alkylaluminum dihalides such as ethylaluminum dichloride, n-hexylaluminum dichloride, and dodecylaluminum dibromide; alkylaluminum sesquihalides such as ethylaluminum sesquichloride, and isooctylaluminum sesquichloride; and dialkylaluminum halides such as diethylaluminum chloride, and di-n-hexylaluminum bromide. Alkylaluminum halides which are more preferred according to this invention are the alkylaluminum dichlorides. Most preferably, an alkylaluminum dichloride wherein the alkyl radical contains 2 to 6 carbon atoms is employed. Ethylaluminum dichloride is especially preferred.

The supported catalysts components of this invention are prepared by reacting components comprising at least one compound of a Group IVB, VB, or VIB metal, at least one divalent metal salt of a phosphorus acid ester having at least one phosphorus acid ester group bonded to metal through oxygen or sulfur, and at least one alkylaluminum halide such that a solid, hydrocarbon insoluble catalyst component is formed.

The sequence in which the above-described components are combined is not critical except that the Group IVB, VB, or VIB metal component should not be contacted with the alkylaluminum halide prior to addition of the support material because in some cases an undesirable reduction of the Group IVB, VB, or VIB metal takes place. Usefully, the Group IVB, VB, or VIB metal component, the support material, and the alkylaluminum halide are combined concurrently or the support material and one of the other components are combined and then the remaining component is added to the result. The preferred preparative sequence according to this invention is to first combine the Group IVB, VB, or VIB metal component and the support material and then add the alkylaluminum halide component to the result.

Irrespective of the sequence in which the above-described components are combined, reaction temperatures suitably range from −30 to 180°C. Preferably, temperatures range from 15 to 60°C. Suitable reaction times range from several minutes to several hours, and preferably, from 1/2 to 10 hours. When the Group IVB, VB, or VIB metal component and the support material are combined in a first step followed by addition of the alkylaluminum halide to the result according to the most preferred preparative sequence, it is most preferred to carry out the first step over a period of 1/4 to 5 hours and

then combined and react the alkylaluminum halide with the resulting product over a period of 1/4 to 5 hours.

The above-described preparation can be carried out neat or in the presence of an inert diluent. In preparative steps involving the alkylaluminum halide component, the presence of a diluent is preferred to make the component non-pyrophoric and to aid in conductance of heat evolved due to the preparative reaction away from the solid catalyst component which ultimately forms. In preparative steps not involving the alkylaluminum halide component, it often is convenient to employ a diluent to facilitate handling and mixing of the Group IVB, VB, or VIB metal component and the support material. However, when the Group IVB, VB, or VIB component comprises a liquid in which the support material is soluble, it also is convenient to combine and react such materials neat, that is, in the absence of a diluent.

Diluents suitable for use according to this invention include hydrocarbons and halogenated derivatives thereof which are liquid at reaction temperatures and in which at least one of the materials employed in the preparation is soluble. Examples of useful diluents include alkanes such as hexane, heptane, octane, nonane, and so forth; cycloalkanes such as cyclohexane and ethylcyclohexane; aromatics such as ethylbenzene, and halogenated and hydrogenated aromatics such as chlorobenzene, *o*-dichlorobenzene, tetrahydronaphthalene, and decahydronaphthalene. Preferred diluents are the alkanes and especially hexane.

The preparation of the solid, hydrocarbon insoluble, supported catalyst components of this invention is carried out in the substantial absence of oxygen, water, carbon dioxide, and other catalyst poisons. These materials are conveniently excluded by carrying out the preparation under an atmosphere of nitrogen or other inert gas, although other suitable means also can be employed. It also is desirable to purify any diluent to be employed in the preparation, such as by percolation through molecular sieves and/or silica gel, to remove traces of oxygen, water, carbon dioxide, polar compounds, and other contaminants which may be present in the diluent.

In the preparation, the Group IVB, VB, or VIB metal component and the support material are employed in amounts such that the atomic ratio of metal contained in the Group IVB, VIB, or VIB metal component to divalent metal contained in the support material ranges from 0.05:1 to 10:1. Preferably, this ratio ranges from 0.1:1 to 4:1, and more preferably, from 0.1:1 to 1:1. Ratios ranging from 0.1:1 to 0.5:1 are most preferred from the standpoint of catalytic activity.

The alkylaluminum halide component is employed in an amount that total moles of halogen to metal bonds in the alkylaluminum halide component, the Group IVB, VB, or VIB metal component, and support material is at least equal to (1) the product of the molar amount of Group IVB, VB, or VIB metal employed and the valence of such metal plus (2) two times the molar amount of divalent metal employed. Of course, when combinations of compounds of different Group IVB, VB, and VIB metals having different valence states (e.g., a combination of a titanium (IV) compound and a vanadium (III) compound) are employed, (1) above will be the sum of the respective products of the individual molar amounts and valences. It is preferred to employ the alkylaluminum halide in an amount such that total halogen to metal bonds in the system ranges from 1 to 10 times the sum of (1) and (2) above. More preferably, the ratio of total halogen to the sum of (1) and (2) ranges from 1.2:1 to 8:1. Greater amounts of alkylaluminum halide also can be employed although gradual decreases in activity and difficulties in handling the final catalyst component due to agglomeration thereof often are observed with increasing amounts of alkylaluminum halide.

As a result of the above-described preparation there is obtained a solid, hydrocarbon insoluble, supported catalyst component which can be combined with an organometallic promoter and employed in the polymerization of alpha-olefins. Useful organometallic promoters include any of the materials commonly employed as promoters for alpha-olefin polymerization catalyst components containing compounds of the Group IVB, VB, or VIB metals. Examples of such promoters include the Group IA, IIA, IIB, IIIA and IVA metal alkyls, hydrides, alkylhydrides, and alkylhalides, such as alkyllithium compounds, dialkylzinc compounds, trialkylboron compounds, trialkylaluminum compounds, alkylaluminum halides and hydrides. Mixtures also can be employed. Specific examples of useful promoters include n-butyllithium, diethylzinc, di-n-propylzinc, triethylboron, triethylaluminum, triisobutylaluminum, tri-n-hexylaluminum, ethylaluminum dichloride, dibromide, and dihydride, isobutylaluminum dichloride, dibromide, and dihydride, diethylaluminum chloride, bromide, and hydride, di-n-propylaluminum chloride, bromide, and hydride, and diisobutylaluminum chloride, bromide, and hydride. Organometallic promoters which are preferred for use according to this invention are the Group IIIA metal alkyls and dialkylhydrides having 1 to 20 carbon atoms per alkyl radical. More preferably, the promoter is a trialkylaluminum compound having 1 to 6 carbon atoms per alkyl radical such as trimethyl-, triethyl-, tri-n-propyl-, triisobutyl-, tri-n-pentyl-, and tri-n-hexylaluminum. Most preferably, the organometallic promoter is triethylaluminum.

The organometallic promoter is employed in at least an amount which is effective to promote the polymerization activity of the supported component. Preferably, at least about three parts, by weight, of promoter are employed per part, by weight, of solid component, although higher ratios, such as 10:1, 25:1, 100:1 or higher also are suitable and often give highly beneficial results. In solution

polymerization processes, a portion of the promoter can be employed to pretreat the polymerization medium if desired.

Prior to combining the supported catalyst components of this invention with an organometallic promoter, it also is contemplated to temporarily and reversibly deactivate the components by contacting the same with a suitable deactivating agent. In this manner, the invented catalyst components, which exhibit some polymerization activity even in the absence of a promoter, can be employed, without plugging of catalyst feed lines or inlet ports, in polymerization systems wherein catalyst components are conveyed to a polymerization zone in a stream containing polymerizable alphaolefin or wherein the component otherwise contacts polymerizable monomer prior to entry into the polymerization zone. Once inside the polymerization zone, the effects of the temporary deactivation can be undone and activity promoted by contacting the catalyst components with an organometallic promoter. Preferably, temporary deactivation of the invented catalyst components is effected by contacting the component with a suitable deactivating agent in an inert hydrocarbon or halogenated hydrocarbon liquid, such as that used as a diluent during catalyst component preparation, at a temperature ranging from −10 to 100°C in amounts such that the molar ratio of deactivating agent to metalhydride and/or metal-alkyl bonds in the catalyst component ranges from 0.1:1 to 10:1. Examples of useful deactivating agents include aliphatic and aromatic alcohols, preferably those containing 1 to 8 carbon atoms; ethers containing 2 to 10 carbons; ketones containing 3 to 10 carbons; aldehydes containing 1 to 10 carbons; carboxylic acids and esters thereof; hydrogen halides; thiols; mercaptans; carbon oxides and sulfides; and water. Mixtures also can be used if desired. Deactivating agents which are preferred for use with the supported catalyst components of this invention are lower aliphatic alcohols, and particularly ethanol.

According to the invention, the above-described catalysts are employed in alpha-olefin polymerization processes wherein at least one polymerizable alphaolefin is contacted with the catalyst under polymerizing conditions. Solution, bulk, and vapor phase processes are contemplated herein.

Alpha-olefins which can be polymerized in the presence of the invented catalysts include ethylene, propylene, butene-1, penten-1, 4-methylpentene-1, hexene-1, and mixtures thereof. Preferably, the invented catalysts are employed in the polymerization of ethylene or a mixture of ethylene with up to 20 mole % of a higher alpha-olefin. Most preferably, the catalysts of this invention are employed in the homopolymerization of ethylene.

The conditions under which the invented catalysts are employed in the polymerization of alpha-olefins are referred to herein as "polymerizing conditions" and include catalyst concentration, polymerization temperature and time, monomer pressure, the use of diluents in solution processes, exclusion of catalyst poisons, the use of agents to regulate polymer molecular weights, and other conditions well known to persons of skill in the art.

The amount of catalyst employed in polymerization is a catalytically effective amount and varies depending on a number of factors, such as reactor size, and choice of monomer and can be determined by persons of skill in the art from the examples appearing hereinafter.

Polymerization temperatures will vary depending upon the type of process employed. In solution processes, wherein a solution of molten polyalpha-olefin in an inert polymerization medium is formed, the temperature should be sufficiently high to avoid solidification of the polymer but not so high as to vaporize the diluent employed. In the solution polymerization of ethylene, suitable temperatures range from 120 to 210°C. In particle form polymerization processes, wherein a suspension of solid, particulate polymer in an inert polymerization medium is formed, and in vapor phase processes, wherein solid, particulate polymer is formed in the absence of liquid polymerization medium, temperatures should be maintained at levels sufficiently low to avoid melting of the polymer in the polymerization zone but high enough to achieve reasonable polymerization rates. Preferred temperatures in the particle form polymerization of ethylene range from 40 to 110°C. In the vapor phase polymerization of ethylene, temperatures preferably range from 40 to 130°C, and more preferably, from 60 to 120°C.

In solution or particle form processes, the liquid employed as the polymerization medium can be an alkane or cycloalkane such as butane, isobutane, pentane, hexane, heptane or cyclohexane, or a hydrogenated aromatic compound such as tetrahydronaphthalene or decahydronaphthalene, or a high molecular weight liquid paraffin or mixture of paraffins which are liquid at the polymerization temperature, or an aromatic hydrocarbon such as benzene, toluene or xylene or a halogenated aromatic compound such as chlorobenzene, chloronaphthalene or ortho-dichlorobenzene. The nature of the medium is subject to considerable variation, although the medium employed should be liquid under polymerization conditions and relatively inert. Other media which can be used include ethylbenzene, isopropylbenzene, ethyltoluene, n-propylbenzene, diethylbenzenes, mono- and dialkylnaphthalenes, n-octane, isooctane and methylcyclohexane. Preferably, a butane, pentane, or hexane is employed.

Irrespective of the type of polymerization process employed, polymerization typically is carried out in the presence of agents which act as chain terminators and thereby allow for control of polyalpha-olefin molecular weights. Most commonly, hydrogen is employed for this purpose. The amount of hydrogen to be employed will vary depending upon the molecular weight desired and can be determined by those of skill in the art based upon the examples appearing hereinafter.

Also irrespective of polymerization technique, monomer pressures and total reactor pressures are maintained at levels sufficient to achieve reasonable polymerization rates and generally range from 100 to 1000 psig (7 to 70 $kg/cm^2$), and more preferably, from 200 to 400 psig (14 to 30 $kg/cm^2$).

Polymerization time generally ranges from several minutes to several hours in batch processes. Contact times ranging from 1 to 4 hours are common when autoclave type reactors are employed. In continuous systems, wherein polymerization medium, if any, and excess monomer are recycled to a charging zone and additional catalyst and monomer introduced, contact times in the polymerization zone can be regulated as desired, and generally range from 1/2 to several hours.

Polymerization in the presence of the invented catalysts is carried out in the substantial absence of oxygen, water, carbon dioxide, and other materials capable of adversely affecting catalyst activity. Typically, special steps need not be taken to exclude such materials from the polymerization zone due to the positive pressure exerted by the alpha-olefin to be polymerized. Purification of monomer and any diluent to be employed, such as by percolation through molecular sieves and/or silica gel, or through the use of excess promoter to scavenge impurities also is helpful in excluding catalyst poisons. In polymerization processes wherein the invented supported catalyst components are contacted with a deactivating agent to facilitate addition of the component to a polymerization zone in an alpha-olefin-containing flush stream, it often is desirable to use excess promoter to scavenge the deactivator and thereby ensure the attainment of high activities.

As a result of the above-described polymerization in the presence of the invented catalysts there are obtained polyalpha-olefins having molecular weights typically ranging from 50,000 to 3,000,000 in sufficiently high yields, relative to the amount of catalyst employed, that useful polymeric products are obtained without separation of catalyst residues. The polymers exhibit sufficiently board molecular weight distributions as to be processable by a variety of techniques such as extrusion, mechanical melting, casting, and molding.

The following examples illustrate the present invention and are not to be construed as limiting the scope thereof.

Example 1

Into a 500 ml round bottom flask equipped with mechanical stirrer, nitrogen inlet, and condensor were added 54.5 g anhydrous magnesium acetate, 200 ml triethyl orthophosphate, and 100 ml nonane. Prior to use, the magnesium acetate had been ground, dried overnight in a vacuum oven under nitrogen flow at 140°C under vacuum of 10 inches (about 250 mm) Hg, and then reground. The magnesium acetate-triethyl orthophosphate-nonane mixture was heated to distill 75 ml ethyl acetate. Four days later, the resulting slurry was transferred to a sinter glass funnel, the liquid was removed, and the remaining solid washed three times with about 200 ml hexane. The washed solid then was dried overnight at 75°C under vacuum of 25 inches (about 625 mm) Hg. There were recovered 120.5 g solid, anhydrous magnesium bis(diethyl orthophosphate).

Into a 500 ml flask equipped with mechanical stirrer and nitrogen inlet were added 13.0 g of the anhydrous magnesium bis(diethyl orthophosphate), 2.4 ml titanium tetrabutoxide, and 300 ml hexane and the mixture was stirred for 3 hours at ambient temperature. 37 ml of 3.37 *M* ethylaluminum dichloride in hexane then were added slowly, with stirring, and the resulting mixture was stirred for an additional $1\frac{1}{2}$ hours. A 1.1 ml sample of the resulting suspension was removed and diluted with 50 ml hexane. Aliquots of the result, identified as 1A, were employed according to Example 5. The titanium to magnesium to aluminum atomic ratio was 0.18:1.0:3.2 and the ratio of halogen to metal bonds to four times titanium plus two times magnesium was 2.4:1.0.

To the suspension remaining after removal of the 1.1 ml sample were added 23 ml ethylaluminum dichloride solution and the resulting suspension was stirred for 1/2 hour. A 3.4 ml sample was removed and diluted with additional hexane. Aliquots of the result, identified as 1B, were employed according to Example 5. The titanium to magnesium to aluminum atomic ratio was 0.18:1.0:5.2 and the ratio of halogen to metal bonds to four times titanium plus two times magnesium was 3.8:1.0.

To the suspension remaining after removal of the 3.4 ml sample were added an additional 20 ml of ethylaluminum dichloride solution. Aliquots of the result, identified as 1C, were employed according to Example 5. The titanium to magnesium to aluminum atomic ratio was 0.18:1.0:6.9 and the ratio of halogen to metal bonds to four times titanium plus two times magnesium was 5.1:1.0.

Example 2

Into a 300 ml flask equipped with mechanical stirrer and nitrogen inlet were added 31.2 g anhydrous magnesium bis(diethyl orthophosphate), prepared substantially as described in Example 1, 12.5 ml titanium tetrabutoxide, and 100 ml hexane. The resulting mixture was stirred for 15 minutes at ambient temperature and then 45 ml of 3.37 *M* ethylaluminum dichloride in hexane were added dropwise, with stirring, over 1 hour. The contents of the flask were stirred for 2 hours following completion of the ethylaluminum dichloride addition. A 1 ml sample of the resulting suspension was removed and diluted with 49 ml hexane, and aliquots of the result, identified as 2A, were employed in the polymerization of ethylene according to Example 5. The titanium to magnesium to aluminum

atomic ratio in this preparation was 0.4:1.0:1.6. The ratio of halogen to metal bonds to four times titanium plus two times magnesium was 0.9:1.0.

To the suspension remaining after removal of the 1 ml sample were added 55 ml of the ethylaluminum dichloride solution over a period of 15 minutes and the mixture was stirred for 1 hour. A 1.4 ml sample of the resulting suspension was diluted with 49 ml hexane and aliquots of the result, identified as 2B, were employed according to Example 5. The atomic ratio of titanium to magnesium to aluminum was 0.4:1.0:3.6. The ratio of halogen to metal bonds to four times titanium plus two times magnesium was 2.0:1.0.

To the suspension remaining after removal of the 1.4 ml sample were added 35 ml of the ethylaluminum dichloride solution and a 1.6 ml sample of the resulting suspension was diluted with 49 ml hexane. Aliquots of the resulting suspension, identified as 2C, were employed according to Example 5. The atomic ratio of titanium to magnesium to aluminum was 0.4:1.0:5.0 and the ratio of halogen to metal bonds to four times titanium plus two times magnesium was 2.8:1.0.

Example 3

Into a 300 ml three neck, round bottom flask equipped as in Example 2 were added 14.5 g anhydrous magnesium bis(diethyl orthophosphate) prepared substantially as described in Example 1, 7.0 ml titanium tetrabutoxide, and 90 ml hexane. The contents of the flask were stirred ten minutes at ambient temperature and then 68 ml of a 3.37 *M* solution of ethylaluminum dichloride in hexane were added dropwise, with stirring, over a two hour period. There resulted a finely divided solid suspended in hexane. A 3 ml aliquot of the suspension was removed and diluted with 47 ml hexane. Portions of the resulting suspension were employed in the polymerization of ethylene according to Example 5. The atomic ratio of titanium to magnesium to aluminum used in this preparation was 0.4:1.0:5.0. The molar ratio of total halogen to metal bonds to four times titanium plus two times magnesium was 2.8:1.0.

Example 4

Into a 500 ml flask equipped as in Example 2 were added 16.0 g of the anhydrous magnesium bis(diethyl orthophosphate) prepared in Example 1, 1.65 ml titanium tetrabutoxide, and 300 ml hexane. After stirring of the resulting mixture at ambient temperature for a short time, 43 ml of a 1.12 *M* solution of ethylaluminum dichloride in hexane were added, with stirring, over a period of 1/2 hour. The resulting suspension was stirred for an additional hour after completion of the ethylaluminum dichloride addition and a 5.5 ml sample was removed and diluted with 50 ml hexane. Aliquots of the resulting catalyst suspension, identified as 4A, were employed according to Example 5. The titanium to magnesium to aluminum atomic ratio was 0.1:1.0:1.0 and the ratio of halogen to metal bonds to four times titanium plus two times magnesium was 0.8:1.

To the suspension remaining after removal of the 5.5 ml sample were added 77 ml of the ethylaluminum dichloride solution and a 3 ml sample of the result was removed and diluted with hexane. Aliquots of the resulting suspension, identified as 4B, were employed according to Example 5. The titanium to magnesium to aluminum atomic ratio was 0.1:1.0:1.8 and the ratio of halogen to metal bonds to four times titanium plus two times magnesium was 1.5:1.0.

Example 5

To a 1 liter, stirred, autoclave reactor were charged 500 ml hexane, 40 mg triethylaluminum, and samples of the catalyst component suspensions prepared in Examples 1—4 containing the amounts of titanium specified in Table 1. The catalyst component samples were combined with 20 mg triethylaluminum and 1 ml hexane prior to charging. Hydrogen, at pressures specified in Table 1, was charged to the reactor and a total pressure of 21.1 kg/cm$^2$ was maintained within the reactor by charging polymerization grade ethylene to the reactor at the start and during polymerization. Each run was carried out at 82°C for 1 hour after which the reactor was vented, and opened to terminate the polymerization. The contents of the reactor then were discharged and the solid polyethylene separated by filtration. Results are reported in Table 1.

TABLE 1

| Catalyst component Amount [1] | $H_2$ (kg/cm$^2$) | ACT [2] | MI [3] | MWD [4] | Fines [5] (wt. %) |
|---|---|---|---|---|---|
| 1A | | | | | |
| 0.033 | 3.52 | 1670(117) | 0.6 | ND [6] | ND |
| 0.033 | 4.92 | 1440(101) | 0.5 | 38 | ND |
| 0.033 | 5.62 | 1420(100) | 1.5 | 31 | ND |
| 0.088 | 6.33 | 820(58) | 2.8 | ND | ND |
| 0.066 | 7.73 | 870(61) | 4.7 | 31 | ND |
| 1B | | | | | |
| 0.084 | 3.52 | 1120(80) | 1.0 | ND | ND |
| 0.048 | 4.92 | 1100(79) | 0.9 | 35 | ND |
| 0.060 | 6.33 | 980(70) | 3.0 | ND | ND |
| 0.060 | 7.73 | 800(57) | 6.3 | 33 | ND |
| 1C | | | | | |
| 0.033 | 3.52 | 920(64) | 0.4 | ND | ND |
| 0.066 | 4.92 | 690(49) | 1.1 | 34 | ND |
| 0.050 | 6.33 | 520(37) | 2.7 | ND | ND |
| 0.066 | 7.73 | 400(28) | 4.8 | 34 | ND |
| 2A | | | | | |
| 0.22 | 4.92 | 170 | 1.5 | 31 | 8 |
| 0.22 | 6.33 | 130 | 4.1 | ND | ND |
| 2B | | | | | |
| 0.18 | 4.92 | 300 | 1.9 | 35 | 2 |
| 0.23 | 6.33 | 200 | 5.0 | 32 | 4 |
| 2C | | | | | |
| 0.088 | 3.52 | 570 | 0.7 | 32 | 7 |
| 0.18 | 4.92 | 270 | 1.4 | 39 | 3 |
| 0.22 | 6.33 | 260 | 4.1 | 35 | 9 |
| 3 | | | | | |
| 0.14 | 4.92 | 690 | 1.6 | 33 | 13 |
| 0.18 | 6.33 | 390 | 2.1 | 34 | 7 |
| 0.26 | 7.73 | 230 | 4.1 | 34 | 12 |

TABLE 1 (contd.)

| Catalyst component Amount [1] | $H_2$ (kg/cm$^2$) | ACT [2] | MI [3] | MWD [4] | Fines [5] (wt. %) |
|---|---|---|---|---|---|
| 4A | | | | | |
| 0.067 | 4.92 | 340 | 0.6 | 32 | ND |
| 0.067 | 6.33 | 410 | 2.1 | 35 | ND |
| 4B | | | | | |
| 0.035 | 6.33 | 130 | ND | ND | ND |
| 0.175 | 6.33 | 430 | 4.2 | 30 | ND |
| 0.053 | 4.92 | 690 | 1.2 | 31 | ND |

(1) Amount is expressed in mg titanium.
(2) ACT is activity expressed in kg polymer/g Ti/hour. Parenthetical values represent activity in kg polymer/g supported catalyst component/hour.
(3) MI is Melt Index determined according to ASTM D1238-65T, Condition E, and expressed as dg/min.
(4) MWD represents the ratio ($MF_{10}/MF_1$) of melt index according to ASTM D1238-65T, Condition F, to MI and is an indication of molecular weight distribution.
(5) FINES represent the percent, by weight, of a 10 g sample of polymer which passed through a #70 screen in 5 minutes.
(6) ND in the table stands for not determined.

Examples 1—5 and Table 1 illustrate preparation of magnesium bis(diethyl orthophosphate) and preparation of the invented catalyst components and the use thereof in the polymerization of ethylene. Additionally, Table 1 illustrates the highly desirable polymerization performance, and particularly the high activity and hydrogen sensitivity of the invented catalysts, and the low fines content of the resulting polymer.

Example 6

Into a 300 ml flask equipped as in Example 2 and additionally, with a condenser, were added 15.7 g anhydrous magnesium acetate and 50 ml triethyl orthophosphate and the mixture was heated at the reflux temperature for about 1 1/2 hours to distill 15 ml ethyl acetate. The liquid remaining in the flask then was allowed to cool and 200 ml hexane were added. The contents of the flask then were filtered and the solid magnesium bis(diethyl orthophosphate) which had formed was washed with hexane and transferred in 170 ml hexane to a 500 ml flask equipped as in Example 2. To the solid in hexane were added 30 ml titanium tetrabutoxide at ambient temperature, and after stirring for a short time 110 ml of 3.37 *M* ethylaluminum dichloride in hexane were added over a period of about 1/2 hour. A 1.4 ml sample of the resulting suspension was removed and diluted with 70 ml hexane. Aliquots of the resulting suspension, identified as 6A, were employed according to Example 8. The titanium to magnesium to aluminum atomic ratio was 0.8:1.0:3.4.

To the catalyst component suspension remaining after removal of the 1.4 ml sample were added 60 ml of the ethylaluminum dichloride solution at ambient temperature over a period of 15 minutes. A 1.4 ml sample was removed, diluted with 70 ml hexane, and aliquots of the result, identified as 6B, were employed according to Example 8. The titanium to magnesium to aluminum atomic ratio was 0.8:1.0:5.2.

To the catalyst component suspension remaining after removal of the 1.4 ml sample were added 100 ml ethylaluminum dichloride solution at ambient temperature. A 1.4 ml sample then was removed, diluted with 70 ml hexane, and aliquots of the result, identified as 6C, were employed according to Example 8. The titanium to magnesium to aluminum atomic ratio was 0.8:1.0:8.3.

Example 7

Into a flask equipped as in Example 6 were added 13.7 g anhydrous magnesium acetate and 60 ml diethyl phosphite and the mixture was heated at the reflux temperature for about 1/2 hour. 15 ml ethyl acetate distilled during this time. The liquid remaining in the flask was cooled to about 70°C and, on dilution with 100 ml hexane, a solid formed. The solid was filtered, washed with hexane, and then dried in a vacuum oven. 29.5 g of solid, containing magnesium bis(ethyl phosphite) and a minor amount of diethylphosphite due to incomplete washing and drying were obtained. A 21.3 g portion of

the solid then was placed in a 300 ml flask equipped as in Example 2, and 100 ml hexane and 9.7 ml titanium tetrabutoxide added thereto. The resulting mixture was stirred for 1/2 hour at ambient temperature and then 33 ml of 3.37 *M* ethylaluminum dichloride in hexane were added, with stirring, over 1 hour. After stirring for a short time, a 1.0 ml sample of the resulting catalyst component suspension was removed and diluted with 49 ml hexane. Aliquots of this suspension, identified as 7A, were employed according to Example 8. The titanium to magnesium to aluminum atomic ratio was 0.4:1.0:1.5.

To the suspension remaining after removal of the 1.0 ml sample were added 30 ml ethylaluminum dichloride solution and, after stirring for a short time, a 1.2 ml sample, identified as 7B, was removed and aliquots were employed according to Example 8. The titanium to magnesium to aluminum atomic ratio was 0.4:1.0:3.0.

Example 8

Ethylene was polymerized according to the procedure of Example 5 using aliquots of the catalysts suspensions prepared in Examples 6 and 7. Results are reported in Table 2.

TABLE 2

| Catalyst component Amount [1] | $H_2$ (kg/cm$^2$) | ACT [2] | MI [3] | MWD [4] | Fines [5] (wt. %) |
|---|---|---|---|---|---|
| 6A | | | | | |
| 0.54 | 3.52 | 110 | 0.9 | 27 | 7 |
| 0.19 | 4.92 | 67 | 3.1 | ND [6] | ND |
| 0.81 | 6.33 | 78 | 5.0 | 30 | 12 |
| 6B | | | | | |
| 0.22 | 3.52 | 200 | 1.0 | 31 | 3 |
| 0.15 | 4.92 | 150 | 3.2 | ND | ND |
| 0.44 | 6.33 | 90 | 4.6 | 31 | 8 |
| 6C | | | | | |
| 0.54 | 3.52 | 49 | 0.6 | ND | ND |
| 0.72 | 4.92 | 60 | 1.0 | 36 | 7 |
| 0.72 | 6.33 | 84 | 4.3 | 38 | 8 |
| 7A | | | | | |
| 0.19 | 6.33 | 0 | * | * | * |
| 7B | | | | | |
| 0.38 | 3.52 | 39 | 0.13 | ND | ND |
| 0.38 | 4.92 | 82 | 1.0 | 38 | 6 |
| 0.57 | 6.33 | 66 | 2.7 | 29 | 8 |

[1]–[6] See Table 1.

* Polymer yield was too low to determine MI, MWD, or FINES.

Examples 6—8 and Table 2 further illustrate preparation of support materials employed according to this invention, the use of such support materials in preparation of catalyst components, and the polymerization performance thereof. As can be seen from the table, with the exception of component 7A, catalytic activities were good, the components showed good response to hydrogen, and fines

content was low. No polymer was produced in the run using catalyst component 7A due to incomplete removal of diethyl phosphite from the support material. The additional ethylaluminum dichloride employed in preparation of catalyst 7B was sufficient to scavenge the unremoved phosphite such that the catalyst was active.

Example 9 (Comparison)

For comparative purposes, an inorganic phosphate salt, anhydrous magnesium phosphate ($Mg_3(PO_4)_2$), was employed as a support material in preparation of a catalyst component. The component was prepared according to the procedure of Example 2 using 7.25 g anhydrous magnesium phosphate, 11.2 ml titanium tetrabutoxide, and 73 ml 3.37 *M* ethylaluminum dichloride in hexane. A sample of the result was removed and diluted with hexane and aliquots of the result, identified as 9A, were employed according to Example 12. The titanium to magnesium to aluminum ratio was 0.4:1.0:3.0.

To the remainder of the suspension were added another 50 ml ethylaluminum dichloride solution, and a sample was removed. Aliquots of the sample, identified as 9B, were employed according to Example 12. The titanium to magnesium to aluminum ratio was 0.4:1.0:5.0.

To the remainder of the suspension were added another 50 ml ethylaluminum dichloride solution and aliquots, identified as 9C, were employed according to Example 12. The titanium to magnesium to aluminum ratio was 0.4:1.0:7.0.

Example 10 (Comparison)

For comparative purposes, the catalyst component preparation of Example 1 was repeated using 7.34 g anhydrous magnesium phosphate, 5.0 ml titanium tetrabutoxide, and 82 ml 3.37 *M* ethylaluminum dichloride in hexane. Samples of the result, identified as 10A, were employed according to Example 12. The titanium to magnesium to aluminum atomic ratio was 0.18:1.0:3.0. Additional ethylaluminum dichloride solution was added to the remaining suspension to give a titanium to magnesium to aluminum ratio of 0.18:1.0:5.0, and samples, identified as 10B, were employed according to Example 12.

Example 11 (Comparison)

For comparative purposes, a catalyst component was prepared using anhydrous magnesium acetate as the support material. Into a flask equipped as in Example 2 were added 5.4 g anhydrous magnesium acetate, 5.2 ml titanium tetrabutoxide, and 100 ml hexane. This mixture was stirred for a short time and then 35 ml 3.37 *M* ethylaluminum dichloride in hexane were added slowly with stirring. The result was stirred for an additional 2 hours. A sample of the resulting suspension was removed and diluted with hexane, and aliquots, identified as 11A, were employed according to Example 12. The titanium to magnesium to aluminum atomic ratio was 0.4:1.0:3.1.

To the remaining suspension were added 20 ml ethylaluminum dichloride solution, and a sample of the result was removed and diluted with hexane. Aliquots of the result, identified as 11B, were employed according to Example 12. The titanium to magnesium to aluminum atomic ratio was 0.4:1.0:4.9.

Example 12 (Comparison)

Ethylene was polymerized as in Example 5 using the catalyst components prepared in Examples 9—11. Results are reported in Table 3.

TABLE 3

| Catalyst component Amount [1] | $H_2$ (kg/cm$^2$) | ACT [2] | MI [3] | MWD [4] | Fines [5] (wt. %) |
|---|---|---|---|---|---|
| 9A | | | | | |
| 0.54 | 4.92 | 14 (1.7) | * | * | * |
| 1.1 | 6.33 | 4 (0.5) | * | * | * |
| 9B | | | | | |
| 0.72 | 4.92 | 11 (1.4) | * | * | * |
| 0.72 | 6.33 | 10 (1.2) | * | * | * |
| 9C | | | | | |
| 1.28 | 3.52 | 12 (1.5) | 0.13 | ND [6] | ND |
| 1.28 | 4.92 | 11 (1.3) | 0.20 | ND | ND |
| 10A | | | | | |
| 0.72 | 4.92 | 23 (1.4) | 0.4 | ND | ND |
| 0.96 | 6.33 | 8 (0.5) | * | * | * |
| 10B | | | | | |
| 10.4 | 4.92 | 28 (1.7) | 0.14 | ND | ND |
| 14 | 6.33 | 8 (0.5) | * | * | * |
| 11A | | | | | |
| 0.24 | 4.92 | 150 | 0.5 | 40 | ND |
| 0.096 | 6.33 | 110 | 1.1 | ND | ND |
| 11B | | | | | |
| 0.10 | 4.92 | 360 | 0.6 | 43 | 12 |
| 0.13 | 6.33 | 170 | 2.0 | 33 | 17 |
| 0.17 | 7.73 | 170 | 3.0 | 34 | 12 |

[1]–[6] See Table 1.
* Polymer yield was too low to determine MI, MWD, or Fines.

Examples 9, 10, and 12, and Table 3 illustrate the performance of catalyst components prepared using inorganic phosphate salts as support materials. Comparison of Tables 1 and 2 with Table 3 illustrates that the use of divalent metal salts of organic esters of phosphorus acids as support materials gives catalyst components of superior performance as compared to catalyst components prepared from inorganic phosphate salts.

Example 11 illustrates a catalyst component prepared using magnesium acetate as the support material. While catalyst performance was relatively good (see Table 3), comparison with Tables 1 and 2 reveals that the invented catalysts are generally superior in terms of activity, hydrogen sensitivity, and fines content.

Example 13

Into a 500 ml flask equipped as in Example 2 were added 15.9 g of the anhydrous magnesium

bis(diethyl orthophosphate) prepared in Example 1, 2.1 ml titanium tetrachloride, and 300 ml hexane. This mixture was stirred for about 2 hours at ambient temperature and then divided and used as follows:

(A) Into a 500 ml flask equipped as in Example 2 were added 145 ml of the above mixture and 150 ml hexane. 35 ml of 1.12 *M* ethylaluminum dichloride in hexane then were added slowly at ambient temperature and with stirring. During the addition, the mixture turned brown and the solid agglomerated. Stirring was continued for about 40 minutes following completion of the ethylaluminum dichloride addition and a 4.4 ml sample of the result was removed. This sample was diluted with 50 ml hexane and aliquots, identified as A(1), were employed according to Example 15. The titanium to magnesium to aluminum ratio for this catalyst component was 0.4:1.0:1.6. To the remainder of the suspension were added 46 ml of the ethylaluminum dichloride solution, and a 4.8 ml sample of the result was diluted with 50 ml hexane. Aliquots, identified as A(2) were employed according to Example 15. The titanium to magnesium to aluminum ratio was 0.4:1.0:3.8.

(B) Into a 500 ml flask equipped as in Example 2 were added 151 ml of the titanium tetrachloride-magnesium bis(diethyl orthophosphate)hexane mixture and 150 ml hexane. 60 ml of a 25 wt. % solution of diethylaluminum chloride in hexane then were added slowly at ambient temperature and with stirring. After the addition was completed stirring was continued for a short time and a 4.2 ml sample of the resulting suspension was removed. This sample was diluted with 50 ml hexane and aliquots, identified as B(1), were used according to Example 15. The titanium to magnesium to aluminum ratio was 0.4:1.0:3.7. To the remainder of the suspension were added 35 ml of the diethylaluminum chloride solution and a 4.4 ml sample of the result was diluted with 50 ml hexane. Aliquots, identified as B(2) were used according to Example 15. The titanium to magnesium to aluminum ratio was 0.4:1.0:5.9.

Example 14 (Comparison)

For comparative purposes, a catalyst component was prepared, without the use of an alkylaluminum halide component, as follows: Into a 300 ml flask equipped as in Example 2 were added 2.6 g anhydrous magnesium bis(diethyl orthophosphate) and 50 ml titanium tetrachloride and the mixture was heated at about 136°C for 3 hours. The resulting mixture then was cooled, the liquid decanted, and the solid washed with hexane several times to remove unreacted titanium tetrachloride. The washed solid then was suspended in 100 ml hexane and a 12 ml sample of this suspension was removed, diluted with 40 ml hexane, and employed according to Example 15. The atomic ratio of titanium to magnesium to aluminum employed in this preparation was 52:1.0:0, however, the final catalyst component contained a substantially lower proportion of titanium due to removal of incompletely reacted titanium compounds by washing.

Example 15 (Partial comparison)

Aliquots of the catalyst component suspensions prepared in Examples 13 and 14 were employed in the polymerization of ethylene according to the procedure of Example 5 except that in some runs, the promoter was triisobutylaluminum (TIBA) instead of triethylaluminum (TEA). In such runs, 66 mg TIBA were charged to the reactor and 66 mg were combined with the catalyst samples prior to addition of the samples to the reactor. Results are reported in Table 4.

TABLE 4

| Catalyst component | Promoter | $H_2$ (kg/cm$^2$) | ACT (1) | MI (2) | MWD (3) | Fines (4) (wt. %) |
|---|---|---|---|---|---|---|
| 13A(1) | TEA | 6.33 | 35(4) | * | * | * |
| 13A(2) | TEA | 4.92 | 592(68) | 1.7 | 31 | 9 |
| | TEA | 6.33 | 305(35) | 1.8 | 34 | 6 |
| | TIBA | 4.92 | 766(88) | 1.8 | 34 | 6 |
| | TIBA | 6.33 | 574(66) | 1.8 | 34 | 11 |
| 13B(1) | TEA | 6.33 | 113(13) | 2.3 | ND (5) | ND |
| 13B(2) | TEA | 4.92 | 331(38) | 2.2 | 29 | 2 |
| | TEA** | 6.33 | 331(38) | 3.6 | 32 | 3 |
| | TIBA | 4.92 | 461(53) | 1.3 | 27 | 1 |
| | TIBA | 6.33 | 461(53) | 1.8 | 31 | 1 |
| 14 | TEA | 6.33 | 28(3) | 0.70 | 32 | ND |

(1)–(5) see (2)–(6) Table 1.

* Polymer yield was too low to determine MI, MWD, or FINES.

** In this run 60 mg TEA were stirred with the catalyst component suspension prior to charging and 60 mg TEA were separately charged to the reactor.

Examples 13 and 15 and Table 4 illustrate the preparation and polymerization performance of catalyst components prepared using titanium tetrachloride as the Group IVB, VB, or VIB component and various alkylaluminum halide components. As can be observed the use of diethylaluminum chloride as the alkylaluminum halide (13B) gave a catalyst component comparable to that prepared using ethylaluminum dichloride (13A) but due to the lower halogen content of the former, a greater proportion of aluminum relative to titanium and magnesium was used to obtain such results. Examples 14 and 15 and the table illustrate the performance of a catalyst component prepared without an alkylaluminum halide component. Omission of this component led to insufficient bonding of titanium compounds to the support material, and as a result, activity was poor.

Example 16

Into a 500 ml flask equipped as in Example 2 were added 6.6 g anhydrous magnesium bis(diethyl orthophosphate) and 11.3 ml titanium tributoxychloride and the mixture was heated, with stirring, until the solid dissolved. The solution then was cooled, 270 ml hexane were added and then 30 ml 3.37 *M* ethylaluminum dichloride in hexane were added slowly with stirring. A finely divided solid began to form during the addition. Stirring was continued for a short time after completion of the ethylaluminum dichloride addition. A 2.8 ml sample of the resulting suspension was removed and diluted with 50 ml hexane, and aliquots, identified as A, were employed as described below. The titanium to magnesium to aluminum atomic ratio was 2.0:1.0:5. To the remainder of the suspension were added 18 ml of the ethylaluminum dichloride solution and, after stirring for a short time, a 1.6 ml sample was removed and diluted with 50 ml hexane. Aliquots of the resulting suspension, identified as B, were employed as described below. The titanium to magnesium to aluminum atomic ratio was 2.0:1.0:8.0.

Ethylene was polymerized according to the procedure of Example 15 using aliquots of suspensions A and B. Results are reported in Table 5.

TABLE 5

| Catalyst component | Promoter | $H_2$ (kg/cm$^2$) | ACT [1] | MI [2] | MWD [3] |
|---|---|---|---|---|---|
| A | TEA | 4.92 | 92 | 0.5 | ND [4] |
| | TEA | 4.92 | 76 | 0.7 | 27 |
| | TEA | 6.33 | 69 | 3.0 | 33 |
| | TIBA | 4.92 | 61 | 0.3 | 26 |
| B | TEA | 4.92 | 88 | 0.9 | 29 |
| | TEA | 6.33 | 66 | 1.1 | 31 |
| | TEA | 7.73 | 32 | 4.2 | ND |
| | TIBA | 4.92 | 90 | 0.3 | 31 |

(1) ACT is activity expressed in kg polymer/g supported catalyst component/hour.
(2)–(4) see (3), (4), (6) of Table 1.

This example illustrates a preparation in which the support material and the Group IVB, VB, or VIB component were combined and reacted neat due to the solubility of the former in the latter. The neat, liquid reaction product of such components is easy to handle in subsequent preparative steps, and the use of large amounts of diluent as a suspending medium therefor is avoided. As can be seen from the table, catalyst performance was good.

Example 17

Into a 500 ml flask equipped as in Example 2 were added 2.8 g anhydrous magnesium bis(diethyl orthophosphate), 3.0 ml zirconium tetrabutoxide ($Zr(OC_4H_9)_4 \cdot C_4H_9OH$) and 25 ml nonane. This mixture was heated, with stirring, at about 145°C for about 2 hours and after cooling to about 25°C, 100 ml hexane were added. 9.0 ml 3.37 *M* ethylaluminum dichloride in hexane then were added over a period of about 20 minutes during which time temperature increased from 20 to about 28°C. A 20 ml sample of the resulting suspension was removed, diluted with 50 ml hexane, and aliquots, identified as A, were employed as described below. The zirconium to magnesium to aluminum atomic ratio was 0.82:1.0:3.6. To the remainder of the suspension were added 11.5 ml of the ethylaluminum dichloride solution over a 20 minute period. As a result of the addition, the suspension turned pale brown in color. After stirring of the suspension overnight, a straw brown color and some lumps were observed. A 22 ml sample of the suspension was removed, diluted with 50 ml hexane, and aliquots, identified as B, were employed as described below.

Ethylene was polymerized using aliquots of suspensions A and B according to the procedure of Example 1 except that the amount of TEA charged to the reactor was 40 mg and the amount added to the catalyst suspension was 40 mg. Results are reported in Table 6.

TABLE 6

| Catalyst component | Promoter | $H_2$ (kg/cm$^2$) | ACT [1] | MI [2] | MWD [3] |
|---|---|---|---|---|---|
| A | TEA | 6.33 | 3.7 | 0.8 | 32 |
| | TEA | 7.73 | 3.4 | 1.6 | ND [4] |
| B | TEA | 6.63 | 3.0 | 0.2 | ND |
| | TEA | 9.14 | 1.7 | 0.6 | 54 |

(1)–(4) see Table 5.

This example illustrates catalyst components prepared from a zirconium compound as the Group IVB, VB, or VIB metal component. From the table, it can be seen that the use of a zirconium compound can lead to a broadening of polymer molecular weight distributions as compared with catalyst components prepared using titanium compounds as the Group IVB, VB, or VIB metal component.

It also can be seen that activity was substantially below that of the titanium-based catalysts of this invention (see e.g. Tables 1 and 5). This decrease in activity was not unexpected, as it is well known that zirconium-based catalysts typically are less active than titanium-based catalysts. However, despite the general superiority of titanium-based catalysts, it can be observed that the zirconium-based catalyst component of Example 17 exhibited better performance than the inorganic phosphate salt-supported titanium catalyst components of Examples 9 and 10.

Example 18

Into a 500 ml flask equipped as in Example 2 were added 10.4 g anhydrous magnesium bis(diethyl orthophosphate), 4.3 ml titanium tetrabutoxide, and 11 ml zirconium tetrabutoxide ($Zr(OC_4H_9)_4 \cdot C_4H_9OH$). This mixture was heated, with stirring, for 2 hours and then cooled to about 90°C at which point 300 ml hexane were added and the temperature decreased to about 50°C. To the stirred solution were added 32 ml of 50 wt. % ethylaluminum dichloride in hexane over about 1/2 hour. A sample of the resulting suspension was removed from the suspension, diluted with 50 ml hexane, and aliquots of the result, identified as A, were employed as described below. The titanium to zirconium to magnesium to aluminum atomic ratio for this catalyst component was 0.4:0.8:1.0:3.4.

A series of additional catalyst components (B—D) were prepared by addition of ethylaluminum dichloride solution and removal of samples. The ethylaluminum dichloride solution was added in amounts corresponding to the following atomic ratios:

| Sample | Ti:Zr:Mg:Al |
|---|---|
| B | 0.4:0.8:1.0:6.5 |
| C | 0.4:0.8:1.0:10.0 |
| D | 0.4:0.8:1.0:15.0 |

Samples of B, C, and D were each diluted with 50 ml hexane and aliquots employed as described below.

Ethylene was polymerized using aliquots of catalyst component suspensions A—D according to the procedure of Example 1 except that 60 mg TEA were charged to the reactor and 40 mg were added to the catalyst component suspension prior to charging. Results are reported in Table 7.

TABLE 7

| Catalyst component | Promoter | $H_2$ (kg/cm$^2$) | ACT (1) | MI (2) | MWD (3) |
|---|---|---|---|---|---|
| A | TEA | 4.92 | 17 | 0.7 | 28 |
| | TEA | 6.33 | 10 | 1.2 | 29 |
| B | TEA | 4.92 | 25 | 0.3 | ND (4) |
| | TEA | 6.33 | 13 | 0.6 | 33 |
| | TEA | 7.73 | 10 | 1.2 | 37 |
| C | TEA | 4.92 | 18 | 0.4 | ND |
| | TEA | 6.33 | 12 | 0.6 | ND |
| | TEA | 7.73 | 12 | 0.7 | 40 |
| | TEA | 7.73 | 9 | 0.5 | 47 |
| | TEA | 9.14 | 11 | 7.4 | ND |
| D | TEA | 6.33 | 10 | 0.2 | ND |
| | TEA | 7.73 | 5 | 0.2 | 62 |

(1)—(4) see Table 5.

This example illustrates the preparation and performance of catalyst components prepared using a mixture of titanium and zirconium compounds as the Group IVB, VB, or VIB metal component. From the table it can be seen that these catalyst components exhibited better activities than components prepared using only a zirconium compound as the Group IVB, VB, or VIB metal component, and polymer molecular weight distributions were broadened as compared with runs using catalyst components prepared using only titanium compounds as the Group IVB, VB, or VIB metal component.

Example 19

Into a 500 ml flask equipped as in Example 2 were added 9.8 g anhydrous manganous bis(diethyl orthophosphate), 300 ml hexane, and 3.7 ml titanium tetrabutoxide and the mixture was heated, with stirring, at 68°C for about 6 hours. The mixture then was cooled to about 57°C and 45 ml. 1.12 *M* ethylaluminum dichloride in hexane were added, with stirring, over 1/2 hour. Stirring was continued overnight after which a 12 ml sample of the resulting suspension was removed and diluted with 40 ml hexane. Aliquots, identified as A, were employed as described below. The titanium to manganese to aluminum atomic ratio was 0.4:1.0:1.9. To the remaining suspension were added 63 ml ethylaluminum dichloride solution over 1/2 hour and a 9 ml sample was removed and diluted with 40 ml hexane. Aliquots, identified as B, were employed as described below. The titanium to manganese to aluminum atomic ratio was 0.4:1.0:4.5. To the remaining suspension were added 60 ml ethylaluminum dichloride solution and a 0.8 ml sample was removed and diluted with 50 ml hexane. Aliquots, identified as C, were employed as described below. The titanium to manganese to aluminum atomic ratio was 0.4:1.0:7.1.

Ethylene was polymerized according to the procedure of Example 15 using aliquots of suspensions A—C. Results are reported in Table 8.

TABLE 8

| Catalyst component | Promoter | $H_2$ (kg/cm$^2$) | ACT (1) | MI (2) | MWD (3) |
|---|---|---|---|---|---|
| A | TEA | 6.33 | 55 | 2.0 | 24 |
| B | TEA | 4.92 | 352 | 0.74 | 28 |
| | TEA | 6.33 | 230 | 2.5 | 26 |
| | TEA | 7.73 | 140 | 4.1 | 27 |
| | TEA | 8.44 | 140 | 11.3 | ND (4) |
| | TIBA | 4.92 | 420 | 1.0 | 30 |
| C | TEA | 4.92 | 300 | 0.93 | 33 |
| | TEA | 6.33 | 220 | 1.9 | 27 |

(1)—(4) see (2)—(4) and (6) of Table 1.

This example illustrates the preparation and performance of catalyst component wherein a divalent manganese salt of a phosphorus acid ester was used as the support material. As can be seen from the table, the performance of catalyst components B and C compares favorably with that of components prepared using magnesium salts as the support material. The activity of component A was low due to the use of insufficient ethylaluminum dichloride.

Example 20

The following procedure was followed in preparation of a catalyst component using an iron salt of a phosphorus acid ester as the support material:

(A) Preparation of support material

Into a 300 ml flask equipped as in Example 6 were added 5.6 g iron filings and 100 ml acetic acid. The contents of the flask then were heated at the reflux temperature for 3 hours and a white solid formed. Excess iron was removed with a magnet and the mixture was centrifuged. The liquid was decanted and the remaining solid washed with 400 ml hexane to give 16.3 g white, solid ferrous acetate. 7.0 grams of the ferrous acetate were combined with 80 ml nonane and 40 ml triethyl orthophosphate in a 300 ml flask equipped as in Example 6. The mixture was heated at the reflux temperature for 2 hours during which 8 ml ethyl acetate distilled. The contents of the flask then were

cooled and filtered, and the solid washed with 400 ml hexane. The solid then was dried in a vacuum oven at 50°C to give 13 g anhydrous ferrous bis(diethyl orthophosphate).

(B) Preparation of catalyst component

Into a 300 ml flask equipped as in Example 2 were added 13 g anhydrous ferrous bis(diethyl orthophosphate), 4.8 ml titanium tetrabutoxide, and 100 ml hexane. This mixture was stirred for a short time, and then 40 ml. 3.37 *M* ethylaluminum dichloride in hexane were added over 1/2 hour with continued stirring. A 2 ml sample of the resulting suspension was removed and diluted with 48 ml hexane. Aliquots of the result, identified as B(1), were employed as described below. The atomic ratio of titanium to iron to aluminum was 0.4:1.0:3.8. To the remaining suspension were added 25 ml of the ethylaluminum dichloride solution, and a 2 ml sample was removed and diluted with 48 ml hexane. Aliquots of the result were employed as described below. The titanium to iron to aluminum atomic ratio was 0.4:1.0:6.1.

(C) Polymerization

Ethylene was polymerized according to the procedure of Example 15 using aliquots of catalyst component suspensions B(1) and B(2). Results are reported in Table 9.

TABLE 9

| Catalyst component | Promoter | $H_2$ (kg/cm$^2$) | ACT [1] | MI [2] | MWD [3] |
|---|---|---|---|---|---|
| B(1) | TEA | 6.33 | 23 | 0.24 | 32 |
| | TEA | 8.44 | 6 | 0.11 | ND [4] |
| | TEA | 10.55 | 7 | 0 | ND |
| B(2) | TEA | 6.33 | 16 | 0.15 | ND |

[1]–[4] see Table 5.

This example illustrates the use of an iron salt of a phosphorus acid ester as a support material and the performance of the resulting catalyst component. From the table it can be seen that the catalyst components, while less active than those prepared using divalent magnesium or manganese salts of phosphorus acid esters as support materials, gave good results.

Example 21

This example illustrates the preparation and performance of a temporarily and reversibly deactivated catalyst component.

Into a 500 ml round bottom flask equipped with mechanical stirrer and nitrogen purge were added 12.7 g anhydrous magnesium bis(diethyl orthophosphate), 5.2 ml titanium tetrabutoxide, and 300 ml hexane. This mixture was stirred one hour at room temperature and then allowed to stand overnight. Fifty-four ml of a 3.37 *M* ethylaluminum dichloride solution in hexane then were added over about 1/2 hour. 43.4 ml of the resulting catalyst component suspension were removed and aliquots of the result, identified as A, were employed as described below. The solid in the remainder of the suspension was allowed to settle and then 160 ml of the clear supernatant were decanted and 200 ml hexane were added. The catalyst component was stirred several minutes and again allowed to settle, after which 170 ml clear supernatant was removed and 100 ml hexane added. A mixture of 2.4 ml anhydrous ethanol and 16 ml hexane then were added slowly to the stirred suspension. A 42 ml sample of the stirred suspension was removed and 2 ml thereof were diluted with 50 ml hexane. Aliquots of the result, identified as B, were employed as described below. To the remaining suspension were added 1 ml ethanol and 6 ml hexane. A sample of the result was removed, diluted with hexane, and aliquots thereof, identified as C, were employed as described below. Assuming uniform distribution of aluminum compounds throughout the supernatant removed from the original suspension, the molar ratios of ethanol to metal alkyl bonds contained in catalyst components B and C were 1:1 and 1:1.5 respectively.

A series of ethylene polymerizations were conducted using samples of catalyst components A—C. The polymerizations were carried out as in Example 1 except that no promoter or hydrogen was used and the temperature was 27°C. Results are reported in Table 10.

TABLE 10

| Catalyst component | Yield (g) | Activity (kg polymer/g catalyst component/hr) |
|---|---|---|
| A | 19.6 | 0.34 |
| A | 87.6 | 1.54 |
| B | 8.6 | 0.14 |
| B | 14.7 | 0.25 |
| C | 5.3 | 0.09 |

Another series of polymerizations was conducted according to the procedure of Example 1 using samples of catalyst components A—C and the amounts of TEA specified in Table 11. In the runs using 60 mg TEA, 20 mg were stirred with the catalyst component suspension prior to charging and 40 mg were separately charged to the reactor. In runs using 100 mg TEA, 40 mg were stirred with the catalyst component suspension and 60 mg were separately charged. Results are reported in Table 11.

TABLE 11

| Catalyst component | TEA (mg) | $H_2$ (kg/cm$^2$) | ACT [1] | MI [2] | MWD [3] |
|---|---|---|---|---|---|
| A | 60 | 4.92 | 101 | 0.50 | 34 |
| | 100 | 4.92 | 103 | 0.8 | ND [4] |
| | 100 | 6.33 | 70 | 0.8 | ND |
| B | 100 | 4.92 | 141 | 0.5 | ND |
| | 60 | 6.33 | 108 | 2.2 | ND |
| C | 60 | 4.92 | 88 | 0.8 | 27 |
| | 60 | 6.33 | 63 | 1.0 | 32 |

[1]—[4] see Table 5.

From Table 10 it can be seen that the undeactivated catalyst component (A) exhibited some polymerization activity even in the absence of a promoter, while the deactivated components (B and C) were essentially inactive in the absence of a promoter. From Table 11 it can be seen that when combined with a promoter and employed in the polymerization of ethylene, the performance of the deactivated components (B and C) was comparable to that of the undeactivated component (A).

Example 22

Manganous bis(diethyl orthophosphate) was prepared according to the following procedure:

(A) Drying of manganous acetate

Into a 500 ml flask equipped as in Example 1 and under nitrogen were added 30.4 g manganous acetate tetrahydrate and 150 ml acetic anhydride. The mixture was heated at the reflux temperature for one hour and then stirred for 3 1/2 days. The liquid contained in the flask then was decanted and the remaining solid was washed with hexane, collected on a filter, and dried in a vacuum oven at 97°C for several hours to give 20.6 g of solid, slightly pink, anhydrous manganous acetate.

(B) Preparation of the bis(diethyl orthophosphate) salt

The solid obtained in (A) was placed in a 500 ml flask equipped as in Example 1 and under nitrogen and 100 ml triethyl orthophosphate and 100 ml nonane were added thereto. The mixture then was heated and 24 ml ethyl acetate distilled at about 75°C. As the temperature was increased to 110°C the solid completely dissolved but no more ethyl acetate was recovered. Heating at 110°C was continued for about an hour and then the solution was allowed to cool resulting in formation of a slightly yellow precipitate. After the mixture had been cooled to 0°C, the solid was collected on a filter,

washed with cold hexane, and dried in a vacuum oven at 97°C for several hours. 37.1 g of solid manganous bis(diethyl orthophosphate) were recovered.

Example 23

Calcium bis(diethyl orthophosphate) was prepared as follows:

(A) Drying of calcium acetate

Into a 500 ml flask equipped as in Example 1 and under nitrogen were added 47 g hydrated calcium acetate and 200 ml acetic anhydride. The mixture was stirred and heated at the reflux temperature for 1 hour. The resulting mixture then was filtered and the solid washed with hexane and dried in a vacuum oven at 76°C for several hours to give 48.0 g dried, solid calcium acetate.

(B) Preparation of the bis(diethyl orthophosphate) salt

Into a 500 ml flask equipped as in Example 1 and under nitrogen were added 19.65 g of the dried calcium acetate from (A), 150 ml triethyl orthophosphate, and 100 ml nonane. This mixture was heated to 140°C to distill 75 ml ethyl acetate. The resulting mixture was allowed to cool and then filtered and the solid product was washed with hexane. The solid then was dried at 135°C in a vacuum oven and 37.3 g solid calcium bis(diethyl orthophosphate) were obtained.

## Claims

1. An alpha-olefin polymerization catalyst comprising (A) an organometallic promoter; and (B) a solid, hydrocarbon-insoluble component which is the reaction product of components comprising (1) at least one compound of Group IVB, VB, or VIB metal, (2) at least one divalent metal salt of a phosphorus acid ester having at least one phosphorus acid ester group bonded to metal through oxygen or sulfur, and (3) at least one alkylaluminum halide, characterized in that said reaction product (B) is prepared by carrying out the reaction

(A) at an atomic ratio of metal contained in (1) to metal contained in (2) from 0.05:1 to 10:1 and at an amount of (3) so that the total moles of halogen to metal bonds in (3), (1) and (2) is at least equal to the product of the molar amount of the metal of component (1) employed times the valency of such metal of component (1) plus two times the molar amount of divalent metal component (2) employed,

(B) such that components (1) and (2) are reacted in a first step followed by reaction of the result with component (3) or such that components (2) and (3) are reacted in a first step followed by reaction of the result with component (1), and

(C) under substantial absence of oxygen, water, carbondioxide, and other catalyst poisons.

2. The catalyst of claim 1 wherein (1) comprises at least one halide, oxohalide, alkoxide, oxoalkoxide, alkoxyhalide or oxoalkoxyhalide of titanium (IV), zirconium (IV), or vanadium (III), (IV) or (V).

3. The catalyst of claim 1 or 2 wherein (3) comprises an alkylaluminum chloride having 1 to 12 carbon atoms per alkyl radical.

4. The catalyst of any of claims 1—3 wherein (2) comprises at least one material containing the structure

$$—M—Y—\overset{\overset{Y}{\|}}{P}(YR)A$$

wherein M is a divalent Group IIA, IIB, IVA, VIIB, or VIII metal; each Y is independently oxygen or sulfur; A is hydrogen, —YH, R, or —YR; and each R is independently an organic radical or a halo- or amino-substituted organic radical, said organic radical being selected from the group consisting of alkyl of 1 to 12 carbon atoms, aryl of 6 to 10 carbon atoms, and alkaryl and aralkyl of 7 to 12 carbon atoms.

5. The catalyst of any of claims 1—4 wherein (1) comprises at least one titanium (IV) chloride, alkoxide or alkoxychloride having 1 to 10 carbon atoms per alkoxy radical or a mixture thereof with at least one zirconium (IV) chloride, alkoxide or alkoxychloride having 1 to 10 carbon atoms per alkoxy radical.

6. The catalyst of any of claims 1—5 wherein (2) comprises at least one magnesium bis(dialkyl orthophosphate) or magnesium bis(monoalkyl phosphite) wherein the alkyl groups contain 1 to 6 carbon atoms.

7. The catalyst of claim 6 wherein the magnesium bis(dialkyl orthophosphate) or magnesium bis(monoalkyl phosphite) comprises the reaction product of (a) at least one magnesium salt of an alkanoic acid of 2 to 6 carbon atoms with (b) at least one trialkyl orthophosphate or dialkyl phosphite containing 1 to 6 carbon atoms per alkyl group, wherein the equivalent ratio of (b) to magnesium-carboxylate bonds in (a) ranges from 1:1 to 10:1, said reaction being carried out at 0 to 150°C.

8. The catalyst of any of claims 1—7 wherein (3) comprises an alkylaluminum dichloride wherein the alkyl group contains 1 to 6 carbon atoms.

9. The catalyst of any of claims 1—8 wherein (1) comprises titanium tetrabutoxide or a mixture thereof with zirconium tetrabutoxide, (2) comprises magnesium bis(diethyl orthophosphate), and (3) comprises ethylaluminum dichloride.

10. The catalyst of any of claims 1—9 wherein the (B) component is temporarily and reversibly inactivated by contacting with aliphatic and aromatic alcohols containing 1 to 8 carbon atoms, ethers containing 2 to 10 carbons, ketones containing 3 to 10 carbons, aldehydes containing 1 to 10 carbons, carboxylic acids and esters thereof, hydrogen halides, thiols, mercaptans, carbon oxides and sulfides, and water, or mixtures thereof as deactivating agents.

11. The catalyst of claim 10 wherein said agent is ethanol.

12. The catalyst of any of claims 1—11 wherein (A) comprises a Group IIIA metal alkyl or alkylhydride containing 1 to 20 carbon atoms per alkyl radical.

13. The catalyst of any of claims 1—12 wherein (A) comprises triethylaluminum.

14. A process for polymerization of alpha-olefins in which at least one alpha-olefin is contacted with a catalyst of any of claims 1—13.

15. A process for preparing an alpha-olefin polymerization catalyst component comprising reacting components comprising (1) at least one compound of a Group IVB, VB, or VIB metal, (2) at least one divalent metal salt of a phosphorus acid ester having at least one phosphorus acid ester group bonded to metal through oxygen or sulfur, and (3) at least one alkylaluminum halide, characterized in that the reaction is carried out

(A) at an atomic ratio of metal contained in (1) to metal contained in (2) from 0.05:1 to 10:1 and at an amount of (3) so that the total moles of halogen to metal bonds in (3), (1) and (2) is at least equal to the product of the molar amount of the metal of component (1) employed times the valency of such metal of component (1) plus two times the molar amount of divalent metal of component (2) employed,

(B) such that components (1) and (2) are reacted in a first step followed by reaction of the result with component (3) or such that components (2) and (3) are reacted in a first step followed by reaction of the result with component (1), and

(C) under substantial absence of oxygen, water, carbondioxide, and other catalyst poisons.

16. The process of claim 15, wherein (1) comprises at least one halide, oxohalide, alkoxide, oxoalkoxide, alkoxyhalide or oxoalkoxyhalide of titanium (IV), zirconium (IV), or vanadium (III), (IV), or (V).

17. The process of claim 15 or 16 wherein (3) comprises an alkylaluminum chloride having 1 to 12 carbon atoms per alkyl radical.

18. The process of any of claims 15—17 wherein (2) comprises at least one material containing the structure

$$-M-Y-\overset{\overset{Y}{\|}}{P}(YR)A$$

wherein M is a divalent Group IIA, IIB, IVA, VIIB, or VIII metal; each Y is independently oxygen or sulfur; A is hydrogen, —YH, R, or —YR; and each R is independently an organic radical or a halo- or amino-substituted organic radical, said organic radical being selected from the group consisting of alkyl of 1 to 12 carbon atoms, aryl of 6 to 10 carbon atoms, and alkaryl and aralkyl of 7 to 12 carbon atoms.

19. The process of any of claims 15—18 wherein the reaction temperature ranges from —30 to 180°C.

20. The process of any of claims 18—19 wherein (1) comprises at least one titanium (IV) chloride, alkoxide or alkoxychloride having 1 to 10 carbon atoms per alkoxy radical or a mixture thereof with at least one zirconium (IV) chloride, alkoxide or alkoxychloride having 1 to 10 carbon atoms per alkoxy radical, (2) comprises at least one magnesium bis(dialkyl orthophosphate) or magnesium bis(monoalkyl phosphite) wherein the alkyl groups contain 1 to 6 carbon atoms, and (3) comprises an alkylaluminum dichloride wherein the alkyl group contains 1 to 6 carbon atoms.

21. The process of any of claims 18—20 further characterized in that the catalyst component is temporarily and reversibly inactivated by contacting with aliphatic and aromatic alcohols containing 1 to 8 carbon atoms, ethers containing 2 to 10 carbons, ketones containing 3 to 10 carbons, aldehydes containing 1 to 10 carbons, carboxylic acids and esters thereof, hydrogen halides, thiols, mercaptans, carbon oxides and sulfides, and water, or mixtures thereof as deactivating agents.

22. The process of claim 21 wherein said deactivating agent is ethanol.

**Patentansprüche**

1. Polymerisationskatalysator für $\alpha$-Olefine aus (A) einem Organometallpromotor und (B) einer

festen kohlenwasserstoffunlöslichen Komponente, bei der es sich um das Reaktionsprodukt aus (1) wenigstens einer Verbindung aus einem Metall aus der Gruppe IVB, VB oder VIB, (2) wenigstens einem zweiwertigen Metallsalz eines Phosphorsäureesters, bei dem wenigstens eine Phosphorsäureestergruppe über Sauerstoff oder Schwefel an Metall gebunden ist, und (3) wenigstens einem Alkylaluminiumhalogenid handelt, dadurch gekennzeichnet, daß das Reaktionsprodukt (B) herstellt wird unter derartiger Durchführung der Umsetzung, daß

(A) das Atomverhältnis von in der Komponente (1) enthaltenem Metall zum in der Komponente (2) enthaltenen Metall 0,05:1 bis 10:1 beträgt und die Komponente (3) in einer solchen Menge vorhanden ist, daß die gesamte Molmenge von Halogen zu Metallbindungen in den Komponenten (3), (1) und (2) wenigstens gleich ist zum Produkt aus der Molmenge aus dem Metall in der Komponente (1) mal der Wertigkeit dieses Metalls in der Komponente (1) plus zweimal der Molmenge der zweiwertigen Metallkomponente (2),

(B) die Komponenten (1) und (2) in einer ersten Stufe miteinander umgesetzt werden und das dabei erhaltene Reaktionsprodukt dann mit der Komponente (3) umgesetzt wird oder die Komponenten (2) und (3) in einer ersten Stufe miteinander umgesetzt werden und das dabei erhaltene Reaktionsprodukt dann mit der Komponente (1) umgesetzt wird und

(C) Sauerstoff, Wasser, Kohlendioxid und sonstige Katalysatorgifte im wesentlichen nicht zugegen sind.

2. Katalysator nach Anspruch 1, dadurch gekennzeichnet, daß die Komponente (1) aus wenigstens einem Halogenid, Oxohalogenid, Alkoxid, Oxoalkoxid, Alkoxyhalogenid oder Oxoalkoxyhalogenid von Titan (IV), Zirkon (IV) oder Vanadium (III), (IV) oder (V) besteht.

3. Katalysator nach Anspruch 1 oder 2, dadurch gekennzeichnet, daß die Komponente (3) aus einem Alkylaluminiumchlorid besteht, das 1 bis 12 Kohlenstoffatome pro Alkylrest enthält.

4. Katalysator nach einem der Ansprüche 1 bis 3, dadurch gekennzeichnet, daß die Komponente (2) aus wenigstens einem Material besteht, das die folgende Struktur enthält

$$-M-Y-\overset{\overset{\displaystyle Y}{\|}}{P}(YR)A,$$

worin M ein zweiwertiges Metall aus der Gruppe IIA, IIB, IVA, VIIB oder VIII ist, Y jeweils unabhängig Sauerstoff oder Schwefel bedeutet, A Wasserstoff, —YH, R oder —YR ist und R jeweils unabhängig einen organischen Rest oder einen durch Halogen oder Amino substituierten organischen Rest bedeutet, wobei dieser organische Rest ausgewählt ist aus der aus Alkyl mit 1 bis 12 Kohlenstoffatomen, Aryl mit 6 bis 10 Kohlenstoffatomen und Alkaryl oder Aralkyl mit jeweils 7 bis 12 Kohlenstoffatomen bestehenden Gruppe.

5. Katalysator nach einem der Ansprüche 1 bis 4, dadurch gekennzeichnet, daß die Komponente (1) aus wenigstens einem Titan (IV)-chlorid, Titan (IV)-alkoxid oder Titan (IV)-alkoxychlorid mit jeweils 1 bis 10 Kohlenstoffatomen pro Alkoxyrest oder aus einem Gemisch hiervon mit wenigstens einem Zirkon (IV)-chlorid, Zirkon (IV)-alkoxid oder Zirkon (IV)-alkoxychlorid mit jeweils 1 bis 10 Kohlenstoffatomen pro Alkoxyrest besteht.

6. Katalysator nach einem der Ansprüche 1 bis 5, dadurch gekennzeichnet, daß die Komponente (2) aus wenigstens einem Magnesium bis(dialkylorthophosphat) oder Magnesiumbis(monoalkylphosphit), worin die Alkylgruppen jeweils 1 bis 6 Kohlenstoffatome enthalten, besteht.

7. Katalysator nach Anspruch 6, dadurch gekennzeichnet, daß das Magnesiumbis(dialkylorthophosphat) oder Magnesiumbis(monoalkylphosphit) aus dem Reaktionsprodukt aus (a) wenigstens einem Magnesiumsalz einer Alkancarbonsäure mit 2 bis 6 Kohlenstoffatomen mit (b) wenigstens einem Trialkylorthophosphat oder Dialkylphosphit, das jeweils 1 bis 6 Kohlenstoffatome pro Alkylgruppe enthält, besteht, wobei das Äquivalentverhältnis von (b) zu Magnesiumcarboxylatbindungen in (a) von 1:1 bis 10:1 reicht und die Umsetzung bei 0°C bis 150°C durchgeführt worden ist.

8. Katalysator nach einem der Ansprüche 1 bis 7, dadurch gekennzeichnet, daß die Komponente (3) aus einem Alkylaluminiumdichlorid, worin die Alkylgruppe 1 bis 6 Kohlenstoffatome enthält, besteht.

9. Katalysator nach einem der Ansprüche 1 bis 8, dadurch gekennzeichnet, daß die Komponente (1) aus Titantetrabutoxid oder einem Gemisch hiervon mit Zirkontetrabutoxid, die Komponente (2) aus Magnesiumbis(diethylorthophosphat) und die Komponente (3) aus Ethylaluminiumdichlorid besteht.

10. Katalysator nach einem der Ansprüche 1 bis 9, dadurch gekennzeichnet, daß der Katalysator temporär und reversibel durch Behandlung mit aliphatischen und aromatischen Alkoholen mit 1 bis 8 Kohlenstoffatomen, Ethern mit 2 bis 10 Kohlenstoffatomen, Ketonen mit 3 bis 10 Kohlenstoffatomen, Aldehyden mit 1 bis 10 Kohlenstoffatomen, Carbonsäuren und Carbonsäureestern, Wasserstoffhalogeniden, Thiolen, Mercaptanen, Kohlenoxiden, Kohlensulfiden und Wasser oder Gemischen hiervon als Desaktivierungsmitteln inaktiviert ist.

11. Katalysator nach Anspruch 10, dadurch gekennzeichnet, daß das Desaktivierungsmittel Ethanol ist.

12. Katalysator nach einem der Ansprüche 1 bis 11, dadurch gekennzeichnet, daß die Komponente (A) aus einem Metallalkyl oder Metallalkylhydrid aus der Gruppe IIIA, das 1 bis 20 Kohlenstoffatome pro Alkylrest enthält, besteht.

13. Katalysator nach einem der Ansprüche 1 bis 12, dadurch gekennzeichnet, daß die Komponente (A) aus Triethylaluminium besteht.

14. Verfahren zur Polymerisation von $\alpha$-Olefinen, dadurch gekennzeichnet, daß man wenigstens ein $\alpha$-Olefin mit einem Katalysator nach einem der Ansprüche 1 bis 13 behandelt.

15. Verfahren zur Herstellung eines Polymerisationskatalysators für $\alpha$-Olefine aus (1) wenigstens einer Verbindung aus einem Metall aus der Gruppe IVB, VB oder VIB, (2) wenigstens einem zweiwertigen Metallsalz eines Phosphorsäureesters, bei dem wenigstens eine Phosphorsäureestergruppe über Sauerstoff oder Schwefel an Metall gebunden ist, und (3) wenigstens einem Alkylaluminiumhalogenid, dadurch gekennzeichnet, daß diese Umsetzung so durchgeführt, daß

(A) das Atomverhältnis von in der Komponente (1) enthaltenem Metall zum in der Komponente (2) enthaltenen Metall 0,05:1 bis 10:1 beträgt und die Komponente (3) in einer solchen Menge vorhanden ist, daß die gesamte Molmenge von Halogen zu Metallbindungen in den Komponenten (3), (1) und (2) wenigstens gleich ist zum Produkt aus der Molmenge aus dem Metall in der Komponente (1) mal der Wertigkeit dieses Metalls in der Komponente (1) plus zweimal der Molmenge der zweiwertigen Metallkomponente (2),

(B) die Komponenten (1) und (2) in einer ersten Stufe miteinander umgesetzt werden und das dabei erhaltene Reaktionsprodukt dann mit der Komponente (3) umgesetzt wird oder die Komponenten (2) und (3) in einer ersten Stufe miteinander umgesetzt werden und das dabei erhaltene Reaktionsprodukt dann mit der Komponente (1) umgesetzt wird und

(C) Sauerstoff, Wasser, Kohlendioxid und sonstige Katalysatorgifte im wesentlichen nicht zugegen sind.

16. Verfahren nach Anspruch 15, dadurch gekennzeichnet, daß die Komponente (1) aus wenigstens einem Halogenid, Oxohalogenid, Alkoxid, Oxoalkoxid, Alkoxyhalogenid oder Oxoalkoxyhalogenid von Titan (IV), Zirkon (IV) oder Vanadium (III), (IV) oder (V) besteht.

17. Verfahren nach Anspruch 15 oder 16, dadurch gekennzeichnet, daß die Komponente (3) aus einem Alkylaluminiumchlorid besteht, das 1 bis 12 Kohlenstoffatome pro Alkylrest enthält.

18. Verfahren nach einem der Ansprüche 15 bis 17, dadurch gekennzeichnet, daß die Komponente (2) aus wenigstens einem Material besteht, das die folgende Struktur enthält

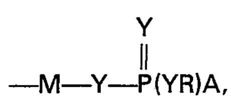

worin M ein zweiwertiges Metall aus der Gruppe IIA, IIB, IVA, VIIB oder VIII ist, Y jeweils unabhängig Sauerstoff oder Schwefel bedeutet, A Wasserstoff, —YH, R oder —YR ist und R jeweils unabhängig einen organischen Rest oder einen durch Halogen oder Amino substituierten organischen Rest bedeutet, wobei dieser organische Rest ausgewählt ist aus der aus Alkyl mit 1 bis 12 Kohlenstoffatomen, Aryl mit 6 bis 10 Kohlenstoffatomen und Alkaryl oder Aralkyl mit jeweils 7 bis 12 Kohlenstoffatomen bestehenden Gruppe.

19. Verfahren nach einem der Ansprüche 15 bis 18, dadurch gekennzeichnet, daß die Reaktionstemperatur —30°C bis 180°C beträgt.

20. Verfahren nach einem der Ansprüche 18 bis 19, dadurch gekennzeichnet, daß die Komponente (1) aus wenigstens einem Titan (IV)-chlorid, Titan (IV)-alkoxid oder Titan (IV)-alkoxychlorid mit jeweils 1 bis 10 Kohlenstoffatomen pro Alkoxyrest oder aus einem Gemisch hiervon mit wenigstens einem Zirkon (IV)-chlorid, Zirkon (IV)-alkoxid oder zirkon (IV)-alkoxychlorid mit jeweils 1 bis 10 Kohlenstoffatomen pro Alkoxyrest, die Komponente (2) aus wenigstens einem Magnesiumbis(dialkylorthophosphat) oder Magnesiumbis(monoalkylphosphit), worin die Alkylgruppen jeweils 1 bis 6 Kohlenstoffatome enthalten, und die Komponente (3) aus einem Alkylaluminiumdichlorid, worin die Alkylgruppe 1 bis 6 Kohlenstoffatome enthält, bestehen.

21. Verfahren nach einem der Ansprüche 18 bis 20, dadurch gekennzeichnet, daß der Katalysator temporär und reversibel durch Behandlung mit aliphatischen und aromatischen Alkoholen mit 1 bis 8 Kohlenstoffatomen, Ethern mit 2 bis 10 Kohlenstoffatomen, Ketonen mis 3 bis 10 Kohlenstoffatomen, Aldehyden mit 1 bis 10 Kohlenstoffatomen, Carbonsäuren und Carbonsäureestern, Wasserstoffhalogeniden, Thiolen, Mercaptanen, Kohlenoxiden, Kohlensulfiden und Wasser oder Gemischen hiervon als Desaktivierungsmitteln inaktiviert ist.

22. Verfahren nach Anspruch 21, dadurch gekennzeichnet, daß das Desaktivierungsmittel Ethanol ist.

**Revendications**

1. Un catalyseur de polymérisation d'alpha-oléfines comprenant A) un promoteur organométallique; et B) un composant solide, insoluble dans les hydrocarbures, lequel est un produit de réaction de composants comprenant 1) au moins un composé d'un métal des groupes IVB, VB ou VIB, 2) au moins un sel de métal divalent d'un ester de l'acide phosphorique comprenant au moins un groupe ester de l'acide phosphorique lié au métal par l'intermédiaire de l'oxygène ou de soufre, et 3) au moins un halogénure d'alkylaluminium, caractérisé en ce que ledit produit de réaction B) est préparé en effectuant la réaction

(A) avec un rapport atomique du métal contenu dans 1) au métal contenu dans 2) compris entre 0,05:1 et 10:1 et une quantité de 3) telle que la somme des moles d'halogène par rapport aux liaisons métal dans 3), 1) et 2) est au moins égale au produit de la quantité molaire du métal du composant 1) utilisé multiplié par la valence de ce métal du composant 1) plus deux fois la quantité molaire du composant métallique divalent 2) employé,
(B) de manière à faire réagir les composants 1) et 2) dans une première étape suivie d'une réaction du produit résultant avec le composant 3) ou de manière à faire réagir dans une première étape les composants 2) et 3) puis le produit résultant avec le composant 1), et
(C) en l'absence substantielle d'oxygène, d'eau, de dioxyde de carbone et d'autres poisons des catalyseurs.

2. Le catalyseur de la revendication 1, dans lequel 1) comprend au moins un halogénure, oxohalogénure, alkylate, oxoalkylate, alcoxyhalogénure ou oxoalcoxyhalogénure de titane (IV), zirconium (IV) ou vanadium (III), (IV) ou (V).

3. Le catalyseur de la revendication 1 ou 2, dans lequel 3) comprend un chlorure d'alkylaluminium contenant de 1 à 12 atomes de carbone par radical alkyle.

4. Le catalyseur de l'une quelconque des revendications 1—3, dans lequel 2) comprend au moins une matière contenant la structure

$$-M-Y-\underset{\underset{Y}{\|}}{P}(YR)A$$

dans laquelle M est un métal divalent du groupe IIA, IIB, IVA, VIIB ou VIII; chaque Y est, indépendamment l'un de l'autre, un oxygène ou soufre; et A est l'hydrogène, —YH, R ou —YR; et chaque R est, indépendamment l'un de l'autre, un radical organique ou un radical organique substitué par de l'halogène ou de l'amino, ledit radical organique étant choisi parmi le groupe constitué par de l'alkyle de 1 à 12 atomes de carbone, aryle de 6 à 10 atomes de carbone et alkaryle et aralkyle de 7 à 12 atomes de carbone.

5. Le catalyseur de l'une quelconque des revendications 1—4, dans lequel 1) comprend au moins un chlorure, alkylate ou alcoxychlorure de titane (IV) ayant de 1 à 10 atomes de carbone par radical alcoxy ou un mélange de ceux-ci avec au moins un chlorure, alkylate ou alcoxychlorure de zirconium (IV) ayant de 1 à 10 atomes de carbone par radical alcoxy.

6. Le catalyseur de l'une quelconque des revendications 1—5, dans lequel 2) comprend au moins un bis (dialkyl orthophosphate) de magnésium ou bis (monoalkyl phosphite) de magnésium où les groupes alkyle contiennent de 1 à 6 atomes de carbone.

7. Le catalyseur de la revendication 6, dans lequel le bis (dialkyl orthophosphate) de magnésium ou le bis (monoalkyl phosphite) de magnésium comprend le produit de réaction (a) d'au moins un sel de magnésium d'un acide alcanoïque de 2 à 6 atomes de carbone avec b) au moins un orthophosphate de trialkyle ou un phosphite de dialkyle contenant de 1 à 6 atomes de carbone par groupe alkyle, le rapport équivalent de b) aux liaisons de carboxylate de magnésium dans a) étant compris entre 1:1 et 10:1, ladite réaction étant effectuée entre 0 et 150°C.

8. Le catalyseur de l'une quelconque des revendications 1—7 dans lequel 3) comprend un dichlorure d'alkylaluminium dont le groupe alkyle contient de 1 à 6 atomes de carbone.

9. Le catalyseur de l'une quelconque des revendications 1—8, dans lequel 1) comprend du tétrabutylate de titane ou un mélange de celui-ci avec du tétrabutylate de zirconium, 2) comprend du bis (diéthyl orthophosphate) de magnésium et 3) comprend du dichlorure d'éthylaluminium.

10. Le catalyseur de l'une quelconque des revendications 1—9, dans lequel le catalyseur est inactivé temporairement et réversiblement par contact avec des alcools aliphatiques et aromatiques contenant de 1 à 8 atomes de carbone, des éthers contenant de 2 à 10 atomes de carbone, des cétones contenant de 3 à 10 atomes de carbone, des aldéhydes contenant de 1 à 10 atomes de carbone, des acides carboxiliques et leurs esters, des acides halogénohydriques, des thiols, des mercaptans, des oxydes et des sulfures de carbone, et de l'eau ou avec des mélanges de ces composés, comme agents de désactivation.

11. Le catalyseur de la revendication 10, dans lequel ledit agent est l'éthanol.

12. Le catalyseur de l'une quelconque des revendications 1—11, dans lequel A) comprend un alkyl ou alkylhydrure d'un métal du groupe IIIA, contenant de 1 à 20 atomes de carbone par radical alkyle.

13. Le catalyseur de l'une quelconque des revendications 1—12, dans lequel A) comprend du triéthylaluminium.

14. Un procédé de polymérisation d'alpha-oléfines, dans lequel au moins une alpha-oléfine est mise en contact avec un catalyseur selon l'une quelconque des revendications 1—13.

15. Un procédé pour préparer un composant de catalyseur de polymérisation d'alpha-oléfines comprenant la réaction de comsants comprenant 1) au moins un composé d'un métal du groupe IVB, VB ou VIB, 2) moins un sel de métal divalent d'un ester d'acide phosphorique ayant au moins un groupe ester de l'acide phosphorique lié au métal par l'intermédiaire de l'oxygène ou de soufre, et 3) au moins un halogénure d'alkylaluminium, caractérisé en ce que la réaction est effectuée

(A) avec un rapport atomique du métal contenu dans 1) au métal contenu dans 2) compris entre 0,05:1 et 10:1 et une quantité de 3) telle que la somme des moles d'halogène par rapport aux liaisons métal dans 3), 1) et 2) est au moins égale au produit de la quantité molaire du métal du composant 1) utilisé multiplié par la valence de ce métal du composant 1) plus deux fois la quantité molaire du composant métallique divalent 2) employé,

(B) de manière à faire réagir les composants 1) et 2) dans une première étape suivie d'une réaction du produit résultant avec le composant 3) ou de manière à faire réagir dans une première étapt les composants 2) et 3) puis le produit résultant avec le composant 1), et

(C) en l'absence substantielle d'oxygène, d'eau, de dioxyde de carbone et d'autres poisons des catalyseurs.

16. Le procédé de la revendication 15, dans lequel 1) comprend au moins un halogénure, oxohalogénure, alkylate, oxoalkylate, alcoxyhalogénure ou oxoalcoxyhalogénure de titane (IV), zirconium (IV) ou vanadium (III), (IV) ou (V).

17. Le procédé de la revendication 15 ou 16, dans lequel 3) comprend un chlorure d'alkylaluminium contenant de 1 à 12 atomes de carbone par radical alkyle.

18. Le procédé de l'une quelconque des revendications 15—17, dans lequel 2) comprend au moins une matière contenant la structure

$$-M-Y-\underset{\underset{Y}{\|}}{P}(YR)A$$

dans laquelle M est un métal divalent du groupe IIA, IIB, IVA, VIIB ou VIII; chaque Y est, indépendamment l'un de l'autre, un oxygène ou soufre; A est l'hydrogène, —YH, R ou —YR; et chaque R est, indépendamment l'un de l'autre, un radical organique ou un radical organique substitué par de l'halogène ou de l'amino, ledit radical organique étant choisi parmi le groupe constitué par de l'alkyle de 1 à 12 atomes de carbone, aryle de 6 à 10 atomes de carbone et alkaryl et aralkyle de 7 à 12 atomes de carbone.

19. Le procédé de l'une quelconque des revendications 15—18, dans lequel la température de réaction est comprise entre —30 et 180°C.

20. Le procédé de l'une quelconque des revendications 18—19, dans lequel 1) comprend au moins un chlorure, alkylate ou alcoxychlorure de titane (IV) ayant de 1 à 10 atomes de carbone par radical alcoxy ou un mélange de ceux-ci avec au moins un chlorure, alkylate ou alcoxychlorure de zirconium (IV) ayant de 1 à 10 atomes de carbone par radical alcoxy, 2) comprend au moins un bis (dialkyl orthophosphate) de magnésium ou un bis (monoalkyl phosphite) de magnésium dont les groupes alkyle contiennent de 1 à 6 atomes de carbone, et 3) comprend un dichlorure d'alkylaluminium dont le groupe alkyle contient de 1 à 6 atomes de carbone.

21. Le procédé de l'une quelconque des revendications 18—20, caractérisé en outre en ce que le catalyseur est inactivé temporairement et réversiblement par contact avec des alcools aliphatiques et aromatiques contenant de 1 à 8 atomes de carbone, des éthers contenant de 2 à 10 atomes de carbone, des cétones contenant de 3 à 10 atomes de carbone, des aldéhydes contenant de 1 à 10 atomes de carbone, des acides carboxyliques et leurs esters, des acides halogénohydriques, des thiols, des mercaptans, des oxydes et des sulfures de carbone, et de l'eau ou avec un mélange de ces composés, comme agents de désactivation.

22. Le procédé de la revendication 21, dans lequel ledit agent de désactivation est l'éthanol.